# EUROPEAN PATENT APPLICATION

(11) **EP 4 797 854 A2**
(43) Date of publication of application: **26.08.2026**
(21) Application number: 26189991.8
(22) Date of filing: 21.04.2016
(51) Int. Cl.: H04W 74/02

(54) **METHODS, APPARATUS AND SYSTEMS FOR PROCEDURES FOR CARRIER SENSE MULTIPLE ACCESS AND SPATIAL REUSE IN SUB-CHANNELIZED WIRELESS LOCAL AREA NETWORKS (WLANS)**

(30) Priority: 28.04.2015 US 201562153819 P
(62) Document number(s) of the earlier application(s) in accordance with Art. 76 EPC: 16720635.8 / 3 289 821
(71) Applicant: InterDigital Patent Holdings, Inc., Wilmington, DE 19809 (US)
(72) Inventor: OTERI, Oghenekome, San Diego, CA 92127 (US); SUN, Li-Hsiang, San Diego, CA 92121 (US); SHAH, Nirav B., San Diego, CA 92131 (US); WANG, Xiaofei, New York, NY 10120 (US); YANG, Rui, New York, NY 10120 (US); ZHANG, Guodong, Woodbury, NY 11797 (US); OLESEN, Robert L., Huntington, NY 11743 (US)
(74) Representative: AWA Sweden AB

(57) **Abstract**

Methods, apparatuses and systems for using at least one sub-channel of a physical channel for uplink communication, the physical channel including a set of resources within first and second channel boundaries such that the physical channel includes a plurality of sub-channels, each sub-channel comprising a subset of the resources of the physical channel and having at least one sub-channel boundary which is not coincident with the first or the second channel boundaries, are provided. One representative apparatus includes a Station (STA) including: a processor, and a transmit/receive unit configured to: transmit, via an uplink, control information including a sub-channel SIG field indicating an identity of the STA, receive a trigger frame indicating one or more sub-channels available form among a plurality of sub-channels, determine which of the one or more sub-channels to acquire, and transmit data, via the uplink, using the one or more acquired sub-channels.

## Description

### FIELD OF DISCLOSURE

The present invention relates to the field of wireless communications and, more particularly, to methods, apparatus and systems for Carrier Sense Multiple Access (CSMA) and spatial reuse, for example, in a Wireless Local Area Network (WLAN).

### BACKGROUND

Generally, a WLAN in Infrastructure Basic Service Set (BSS) mode has an Access Point (AP) for the BSS and one or more stations (STAs) associated with the AP. Traffic between STAs may be sent through the AP. The AP may receive traffic from a source STA and transmit the traffic to a destination STA. Alternatively, the traffic may be sent directly between the source and destination STAs. A WLAN using an Independent BSS (IBSS) mode may not have APs and may have all STAs communicate directly with each other.

### SUMMARY

Methods, apparatuses and systems for using at least one sub-channel of a physical channel for uplink communication are provided. The physical channel may include a set of resources within first and second channel boundaries such that the physical channel may include a plurality of sub-channels, each sub-channel may include a subset of the resources of the physical channel and may have at least one sub-channel boundary which is not coincident with the first or the second channel boundaries. One representative apparatus includes a Station (STA) including: a processor, and a transmit/receive unit configured to: transmit, via an uplink, control information including a sub-channel SIG field indicating an identity of the STA, receive a trigger frame indicating one or more sub-channels available form among a plurality of sub-channels, determine which of the one or more sub-channels to acquire, and transmit data, via the uplink, using the one or more acquired sub-channels.

Another representative apparatus may include an Access Point (AP) configured to allocate sub-channels of a physical channel for uplink communication by a Station (STA). The physical channel may include a set of resources within first and second channel boundaries such that the physical channel may include a plurality of sub-channels, each sub-channel may include a subset of the resources of the physical channel and may have at least one sub-channel boundary which is not coincident with the first or the second channel boundaries. The AP may include: a transmit/receive unit configured to: receive, via an uplink, control information including a sub-channel SIG field indicating an identity of the Station (STA), transmit a trigger frame indicating one or more sub-channels available from among a plurality of sub-channels to the STA; and receive data, via the uplink, using the one or more acquired sub-channels.

A representative method may be implemented by a Station (STA) using at least one sub-channel of a physical channel for uplink communication. The representative method may include: transmitting, via an uplink, control information including a sub-channel SIG field indicating an identity of the STA, receiving a trigger frame indicating one or more sub-channels available form among a plurality of sub-channels, determining which of the one or more sub-channels to acquire, and transmitting data, via the uplink, using the one or more acquired sub-channels.

Another representative method may be implemented by an Access Point (AP) to allocate sub-channels of a physical channel for uplink communication by a Station (STA). The representative method may include: receiving, via an uplink, control information including a sub-channel SIG field indicating an identity of the Station (STA), transmitting a trigger frame indicating one or more sub-channels available from among a plurality of sub-channels to the STA, receiving data, via the uplink, using the one or more acquired sub-channels.

Another representative apparatus includes a Station (STA) configured to use at least one sub-channel of a physical channel for uplink communication. The STA may include: a processor configured to: obtain information about at least one neighboring STA, and a transmit/receive unit configured to: transmit the information about the at least one neighboring STA, and receive (1) a group identity of a group including the STA, and (2) information indicating one or more of the plurality of sub-channels that are allocated to the STA.

Another representative apparatus may include an Access Point (AP) configured to allocate sub-channels of a physical channel to a first station (STA) of a plurality of STAs and one or more further STAs of the plurality of STAs. The AP may include: a transmit/receive unit configured to: for each respective STA of one or more of the plurality of STAs: receive a report including information about one or more neighboring STAs of the respective STA, and a processor configured to: assign a group identity to and allocate the sub-channels of the physical channel to the first STA and the one or more further STAs, as group members of a multi-user group, based on the received reports. The transmit/receive unit may be configured to transmit (1) the group identity, and (2) allocation information associated with the one or more sub-channels to at least the first STA and the one or more further STAs, as the group members of the multi-user group.

Another representative method may be implemented by a Station (STA) for grouping the STA into a multi-user group using at least one sub-channel of a physical channel. The physical channel may include a set of resources associated with a plurality of sub-channels, each sub-channel may include a subset of the resources of the physical channel. The representative method may include: obtaining, by the STA, information about at least one neighboring STA, transmitting, by the STA to the AP, the information about the at least one neighboring STA, and receiving, by the STA: (1) a group identity of a group including the STA, and (2) information indicating one or more of the plurality of sub-channels that are allocated to the STA.

Another representative method may be implemented by an Access Point (AP) to allocate sub-channels of a physical channel to a first station (STA) of a plurality of STAs and one or more further STAs of the plurality of STAs. The representative method may include: for each respective STA of one or more of the plurality of STAs: receiving a report including information about one or more neighboring STAs of the respective STA, assigning a group identity to and allocating the sub-channels of the physical channel to the first STA and the one or more further STAs, as group members of a multi-user group, based on the received reports, and transmitting (1) the group identity, and (2) allocation information associated with the one or more sub-channels to at least the first STA and the one or more further STAs, as the group members of the multi-user group.

### BRIEF DESCRIPTION OF THE DRAWINGS

A more detailed understanding may be had from the Detailed Description below, given by way of example in conjunction with drawings appended hereto. Figures in such drawings, like the detailed description, are examples. As such, the figures and the detailed description are not to be considered limiting, and other equally effective examples are possible and likely. Furthermore, like reference numerals in the figures indicate like elements, and wherein:
FIG. 1 is a system diagram illustrating an example communications system in which one or more disclosed embodiments may be implemented;
FIG. 2 is a system diagram illustrating an example wireless transmit/receive unit (WTRU) that may be used within the communications system illustrated in FIG. 1;
FIG. 3 is a system diagram illustrating an example radio access network and another example core network that may be used within the communications system illustrated in FIG. 1;
FIG. 4 is a system diagram illustrating another example radio access network and another example core network that may be used within the communications system illustrated in FIG. 1;
FIG. 5 is a system diagram illustrating a further example radio access network and a further example core network that may be used within the communications system illustrated in FIG. 1;
FIG. 6 is a system diagram illustrating an example Station (STA) and an example Access Point (AP);
FIG. 7 is a diagram illustrating Enhanced Distributed Channel Access (EDCA) operations;
FIG. 8 is a diagram illustrating energy detect Clear Channel Assessment (CCA) operations;
FIG. 9 is a diagram illustrating a reduced frequency reuse for Carrier Sense Multiple Access (CSMA) operations;
FIG. 10 is a diagram illustrating a representative Neighbor Report frame;
FIG. 11 is a diagram illustrating a representative Discovery Frame;
FIG. 12 is a diagram illustrating operations of sub-channelized CSMA;
FIG. 13 is a diagram illustrating sub-channelized CSMA operations with a double trigger;
FIG. 14 is a diagram illustrating slotted sub-channelized CSMA operations;
FIG. 15 is a diagram illustrating slotted sub-channelized CSMA operations with a double trigger;
FIG. 16 is a flowchart illustrating a method of performing sub-channelized CSMA operations; and
FIG. 17 is a flowchart illustrating a method of performing sub-channelized CSMA operations with a double trigger.

### DETAILED DESCRIPTION

A detailed description of illustrative embodiments may now be described with reference to the figures. However, while the present invention may be described in connection with representative embodiments, it is not limited thereto and it is to be understood that other embodiments may be used or modifications and additions may be made to the described embodiments for performing the same function of the present invention without deviating therefrom.

Although the representative embodiments are generally shown hereafter using wireless network architectures, any number of different network architectures may be used including networks with wired components and/or wireless components, for example.

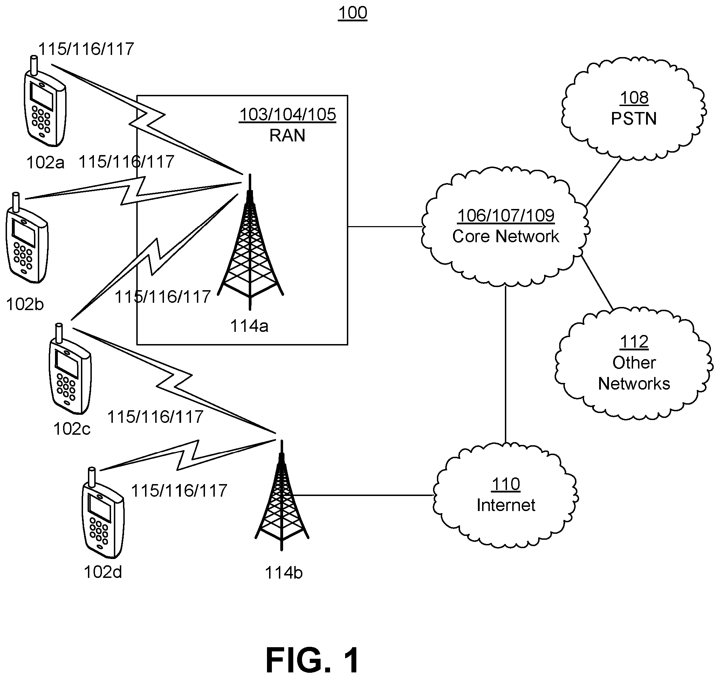

FIG. 1 is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1, the communications system 100 may include wireless transmit/receive units (WTRUs) 102a, 102b, 102c, 102d, a radio access network (RAN) 103/104/105, a core network 106/107/109, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, which may be referred to as a "station" and/or a "STA", may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like. A WTRU, such as the WTRUs 102a, 102b, 102c, and 102d is interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the core network 106/107/109, the Internet 110, and/or the other networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 103/104/105, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and may utilize multiple transceivers for each sector of the cell.

The base stations 114a, 114b may communicate with one or more of the WTRUs 102a, 102b, 102c, 102d over an air interface 115/116/117, which may be any suitable wireless communication link (e.g., radio frequency (RF), microwave, infrared (IR), ultraviolet (UV), visible light, etc.). The air interface 115/116/117 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c, 102d, may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In another embodiment, the base station 114a and the WTRUs 102a, 102b, 102c, 102d may implement a radio technology such as Evolved UMTS Terrestrial Radio Access (E-UTRA), which may establish the air interface 115/116/117 using Long Term Evolution (LTE) and/or LTE-Advanced (LTE-A).

In other embodiments, the base station 114a and the WTRUs 102a, 102b, 102c may implement radio technologies such as Institute for Electrical and Electronics Engineers (IEEE) 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE Radio Access Network (GERAN), and the like.

The base station 114b in FIG. 1 may be a wireless router, Home Node B, Home eNode B, or Access Point (AP), for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1, the base station 114b may have a direct connection to the Internet 110. Thus, the base station 114b may not be required to access the Internet 110 via the core network 106/107/109.

The RAN 103/104/105 may be in communication with the core network 106/107/109, which may be any type of network configured to provide voice, data, applications, and/or voice over internet protocol (VoIP) services to one or more of the WTRUs 102a, 102b, 102c, 102d. For example, the core network 106/107/109 may provide call control, billing services, mobile location-based services, pre-paid calling, Internet connectivity, video distribution, etc., and/or perform high-level security functions, such as user authentication. Although not shown in FIG. 1, it will be appreciated that the RAN 103/104/105 and/or the core network 106/107/109 may directly or indirectly communicate with other RANs that employ the same RAT as the RAN 103/104/105 or a different RAT. For example, in addition to being connected to the RAN 103/104/105, which may communicate using an E-UTRA radio technology, the core network 106/107/109 may also be in communication with another RAN (not shown) employing a GSM, UMTS, CDMA 2000, WiMAX, or WiFi radio technology.

The core network 106/107/109 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another core network connected to one or more RANs, which may employ the same RAT as the RAN 103/104/105 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1 may be configured to communicate with the base station 114a, which may employ a cellular-based radio technology, and with the base station 114b, which may employ an IEEE 802 radio technology.

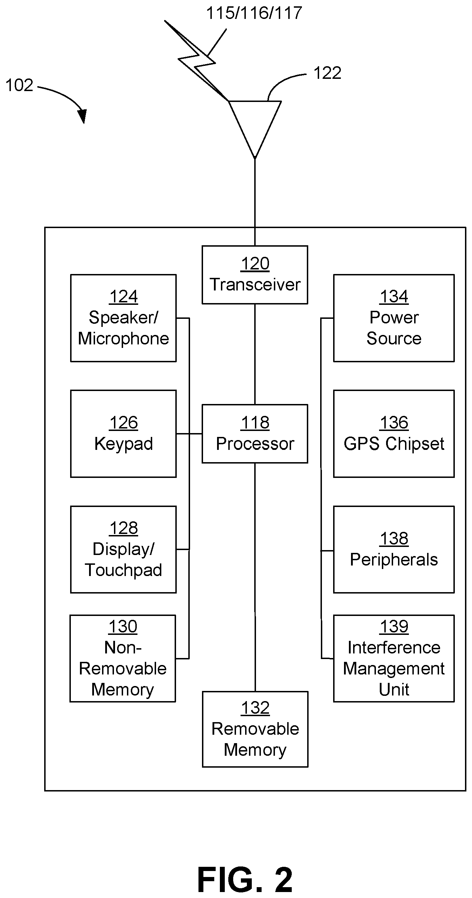

FIG. 2 is a system diagram illustrating an example WTRU 102. As shown in FIG. 2, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 2 depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 115/116/117. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 2 as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, and the like.

The WTRU 102 may include a full duplex radio for which transmission and reception of some or all of the signals (e.g., associated with particular subframes for both the UL (e.g., for transmission) and downlink (e.g. for reception) may be concurrent and/or simultaneous. The full duplex radio may include an interference management unit 139 to reduce and or substantially eliminate self-interference via either hardware (e.g., a choke) or signal processing via a processor (e.g., a separate processor (not shown) or via processor 118).

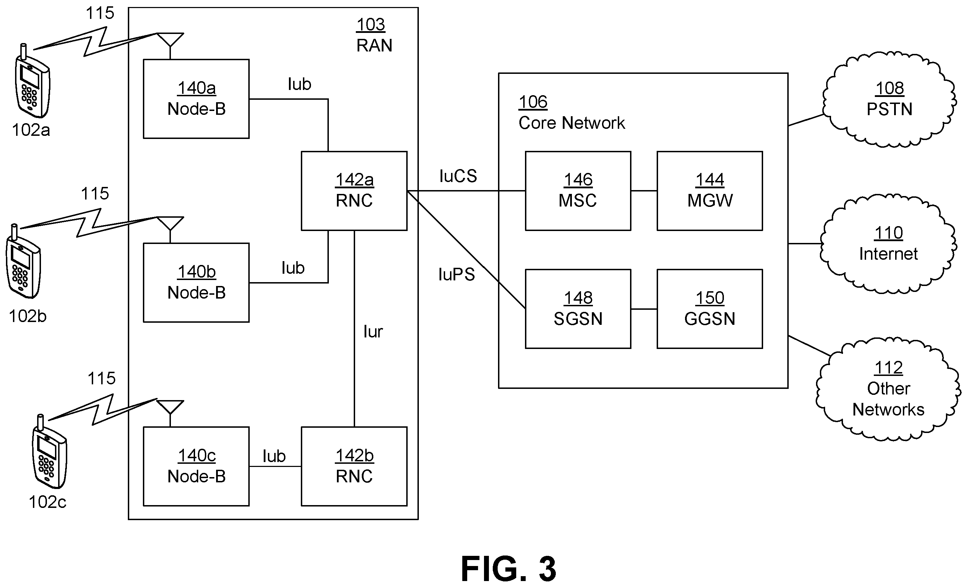

FIG. 3 is a system diagram illustrating the RAN 103 and the core network 106 according to another embodiment. As noted above, the RAN 103 may employ a UTRA radio technology to communicate with the WTRUs 102a, 102b, 102c over the air interface 115. The RAN 103 may also be in communication with the core network 106. As shown in FIG. 3, the RAN 103 may include Node-Bs 140a, 140b, 140c, which may each include one or more transceivers for communicating with the WTRUs 102a, 102b, 102c over the air interface 115. The Node-Bs 140a, 140b, 140c may each be associated with a particular cell (not shown) within the RAN 103. The RAN 103 may also include RNCs 142a, 142b. It will be appreciated that the RAN 103 may include any number of Node-Bs and RNCs while remaining consistent with an embodiment.

As shown in FIG. 3, the Node-Bs 140a, 140b may be in communication with the RNC 142a. Additionally, the Node-B 140c may be in communication with the RNC142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in FIG. 3 may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the other networks 112, which may include other wired and/or wireless networks that are owned and/or operated by other service providers.

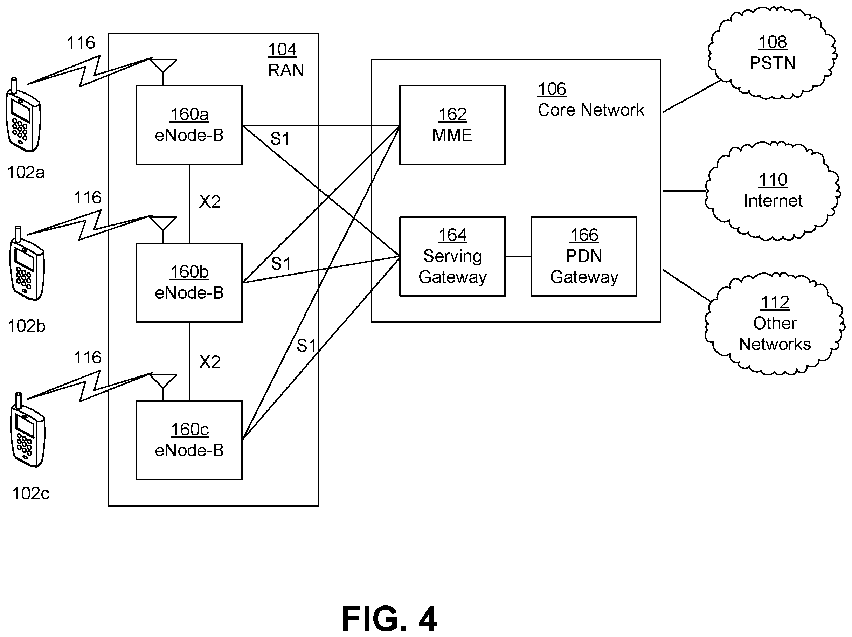

FIG. 4 is a system diagram illustrating the RAN 104 and the core network 106 according to an embodiment. As noted above, the RAN 104 may employ an E-UTRA radio technology to communicate with the WTRUs 102a, 102b, 102c over the air interface 116. The RAN 104 may also be in communication with the core network 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 4, the eNode-Bs 160a, 160b, 160c may communicate with one another over an X2 interface.

The core network 106 shown in FIG. 4 may include a mobility management entity (MME) 162, a serving gateway (SGW) 164, and a packet data network (PDN) gateway (or PGW) 166. While each of the foregoing elements are depicted as part of the core network 106, it will be appreciated that any of these elements may be owned and/or operated by an entity other than the core network operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The serving gateway 164 may be connected to each of the eNode Bs 160a, 160b, 160c in the RAN 104 via the S1 interface. The serving gateway 164 may generally route and forward user data packets to/from the WTRUs 102a, 102b, 102c. The serving gateway 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The serving gateway 164 may be connected to the PDN gateway 166, which may provide the WTRUs 102a, 102b, 102c with access to packet-switched networks, such as the Internet 110, to facilitate communications between the WTRUs 102a, 102b, 102c and IP-enabled devices.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway (e.g., an IP multimedia subsystem (IMS) server) that serves as an interface between the core network 106 and the PSTN 108. In addition, the core network 106 may provide the WTRUs 102a, 102b, 102c with access to the other networks 112, which may include other wired and/or wireless networks that are owned and/or operated by other service providers.

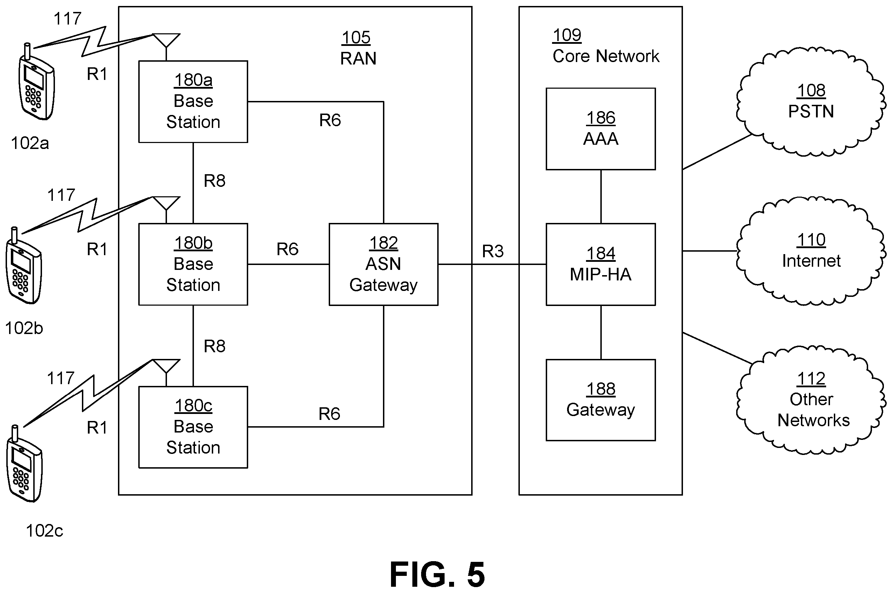

FIG. 5 is a system diagram illustrating the RAN 105 and the core network 109 according to an embodiment. The RAN 105 may be an access service network (ASN) that employs IEEE 802.16 radio technology to communicate with the WTRUs 102a, 102b, 102c over the air interface 117. As will be further discussed below, the communication links between the different functional entities of the WTRUs 102a, 102b, 102c, the RAN 105, and the core network 109 may be defined as reference points.

As shown in FIG. 5, the RAN 105 may include base stations 180a, 180b, 180c, and an ASN gateway 182, though it will be appreciated that the RAN 105 may include any number of base stations and ASN gateways while remaining consistent with an embodiment. The base stations 180a, 180b, 180c may each be associated with a particular cell (not shown) in the RAN 105 and may each include one or more transceivers for communicating with the WTRUs 102a, 102b, 102c over the air interface 117. In one embodiment, the base stations 180a, 180b, 180c may implement MIMO technology. The base station 180a, for example, may use multiple antennas to transmit wireless signals to, and/or receive wireless signals from, the WTRU 102a. The base stations 180a, 180b, 180c may also provide mobility management functions, such as handoff triggering, tunnel establishment, radio resource management, traffic classification, quality of service (QoS) policy enforcement, and the like. The ASN gateway 182 may serve as a traffic aggregation point and may be responsible for paging, caching of subscriber profiles, routing to the core network 109, and the like.

The air interface 117 between the WTRUs 102a, 102b, 102c and the RAN 105 may be defined as an R1 reference point that implements the IEEE 802.16 specification. In addition, each of the WTRUs 102a, 102b, 102c may establish a logical interface (not shown) with the core network 109. The logical interface between the WTRUs 102a, 102b, 102c and the core network 109 may be defined as an R2 reference point, which may be used for authentication, authorization, IP host configuration management, and/or mobility management.

The communication link between each of the base stations 180a, 180b, 180c may be defined as an R8 reference point that includes protocols for facilitating WTRU handovers and the transfer of data between base stations. The communication link between the base stations 180a, 180b, 180c and the ASN gateway 182 may be defined as an R6 reference point. The R6 reference point may include protocols for facilitating mobility management based on mobility events associated with each of the WTRUs 102a, 102b, 102c.

As shown in FIG. 5, the RAN 105 may be connected to the core network 109. The communication link between the RAN 105 and the core network 109 may be defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any of these elements may be owned and/or operated by an entity other than the core network operator.

The MIP-HA 184 may be responsible for IP address management, and may enable the WTRUs 102a, 102b, 102c to roam between different ASNs and/or different core networks. The MIP-HA 184 may provide the WTRUs 102a, 102b, 102c with access to packet-switched networks, such as the Internet 110, to facilitate communications between the WTRUs 102a, 102b, 102c and IP-enabled devices. The AAA server 186 may be responsible for user authentication and for supporting user services. The gateway 188 may facilitate interworking with other networks. For example, the gateway 188 may provide the WTRUs 102a, 102b, 102c with access to circuit-switched networks, such as the PSTN 108, to facilitate communications between the WTRUs 102a, 102b, 102c and traditional land-line communications devices. The gateway 188 may provide the WTRUs 102a, 102b, 102c with access to the other networks 112, which may include other wired and/or wireless networks that are owned and/or operated by other service providers.

Although not shown in FIG. 5, it will be appreciated that the RAN 105 may be connected to other ASNs, other RANS (e.g., RANs 103 and/or 104) and/or the core network 109 may be connected to other core networks (e.g., core network 106 and/or 107. The communication link between the RAN 105 and the other ASNs may be defined as an R4 reference point, which may include protocols for coordinating the mobility of the WTRUs 102a, 102b, 102c between the RAN 105 and the other ASNs. The communication link between the core network 109 and the other core networks may be defined as an R5 reference point (not shown), which may include protocols for facilitating interworking between home core networks and visited core networks.

Although the WTRU is described in FIGS. 1-5 as a wireless terminal, it is contemplated that in certain representative embodiments, such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries ingress and/or egress traffic of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly or indirectly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly or indirectly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., a 20 MHz bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA) and/or the AP may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent 20 MHz channel to form a 40 MHz wide contiguous channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC) layer.

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

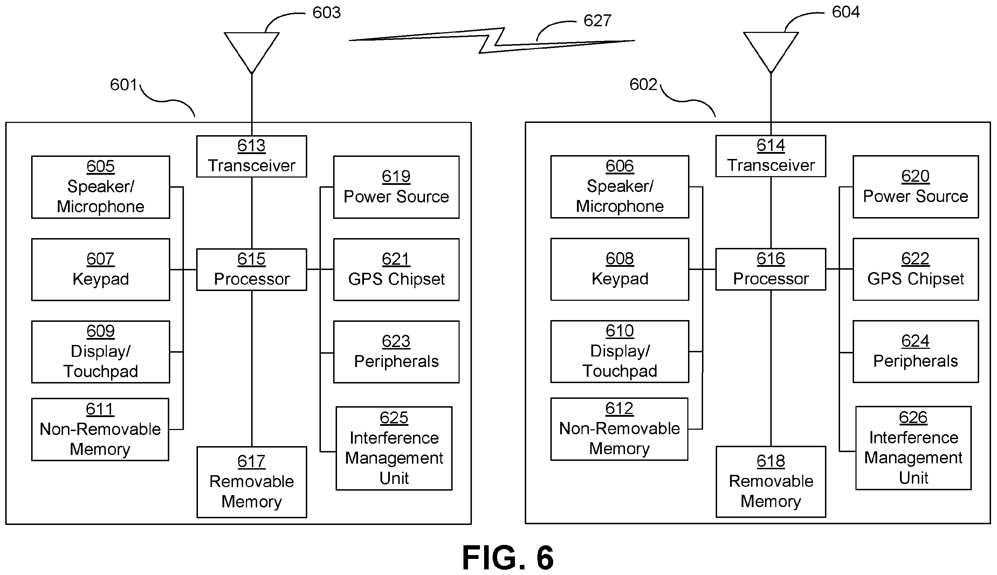

FIG. 6 is a system diagram illustrating an example Station (STA) 601 and an example Access Point (AP) 602, which may communicate via a wired and/or a wireless connection, such as an RF connection. As shown in FIG. 6, the STA 601 may include a processor 615, a transceiver 613, a transmit/receive element 603, a speaker/microphone 605, a keypad 607, a display/touchpad 609, non-removable memory 611, removable memory 617, a power source 619, a global positioning system (GPS) chipset 621, other peripherals 623, and an interface management unit 625, among others. It will be appreciated that the STA 601 may include any sub-combination of the foregoing elements while remaining consistent with an embodiment. The AP 602 may include a processor 616, a transceiver 614, a transmit/receive element 604, a speaker/microphone 606, a keypad 608, a display/touchpad 610, non-removable memory 612, removable memory 618, a power source 620, a global positioning system (GPS) chipset 622, other peripherals 624, and an interface management unit 626, among others. It will be appreciated that the AP 602 may include any sub-combination of the foregoing elements while remaining consistent with an embodiment. Additionally, the above identified elements included in the AP 602 may operate in a similar manner to similarly identified elements included in the STA 601. Description of the elements included in the AP 602 is the same and/or similar to those elements included in the STA 601, and separate description of the elements included in the AP 602 is not provided hereinbelow for the purpose of brevity.

The processor 615 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 615 may perform signal coding, data processing, power control, input/output processing, and/or any other functionality that enables the STA 601 to operate in a wireless environment. The processor 615 may be coupled to the transceiver 613, which may be coupled to the transmit/receive element 603. While FIG. 6 depicts the processor 615 and the transceiver 613 as separate components, it will be appreciated that the processor 615 and the transceiver 613 may be integrated together in an electronic package or chip.

The transmit/receive element 603 may be configured to transmit signals to, or receive signals from an AP (e.g., the AP 602) over the air interface 627. For example, in one embodiment, the transmit/receive element 603 may be an antenna configured to transmit and/or receive RF signals. In another embodiment, the transmit/receive element 603 may be an emitter/detector configured to transmit and/or receive IR, UV, or visible light signals, for example. In yet another embodiment, the transmit/receive element 603 may be configured to transmit and/or receive both RF and light signals. It will be appreciated that the transmit/receive element 603 may be configured to transmit and/or receive any combination of wireless signals.

Although the transmit/receive element 603 is depicted in FIG. 6 as a single element, the STA 601 may include any number of transmit/receive elements 603. More specifically, the STA 601 may employ MIMO technology. Thus, in one embodiment, the STA 601 may include two or more transmit/receive elements 603 (e.g., multiple antennas) for transmitting and receiving wireless signals over the air interface 627.

The transceiver 613 may be configured to modulate the signals that are to be transmitted by the transmit/receive element 603 and to demodulate the signals that are received by the transmit/receive element 603. As noted above, the STA 601 may have multi-mode capabilities. Thus, the transceiver 613 may include multiple transceivers for enabling the STA 601 to communicate via multiple RATs, such as UTRA and IEEE 802.11, for example.

The processor 615 of the STA 601 may be coupled to, and may receive user input data from, the speaker/microphone 605, the keypad 607, and/or the display/touchpad 609 (e.g., a liquid crystal display (LCD) display unit or organic light-emitting diode (OLED) display unit). The processor 615 may also output user data to the speaker/microphone 605, the keypad 607, and/or the display/touchpad 609. The processor 615 may access information from, and store data in, any type of suitable memory, such as the non-removable memory 611 and/or the removable memory 617. The non-removable memory 611 may include random-access memory (RAM), read-only memory (ROM), a hard disk, or any other type of memory storage device. The removable memory 617 may include a subscriber identity module (SIM) card, a memory stick, a secure digital (SD) memory card, and the like. In other embodiments, the processor 615 may access information from, and store data in, memory that is not physically located on the STA 601, such as on a server or a home computer (not shown).

The processor 615 may receive power from the power source 619, and may be configured to distribute and/or control the power to the other components in the STA 601. The power source 619 may be any suitable device for powering the STA 601. For example, the power source 619 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 615 may be coupled to the GPS chipset 621, which may be configured to provide location information (e.g., longitude and latitude) regarding the current location of the STA 601. In addition to, or in lieu of, the information from the GPS chipset 621, the STA 601 may receive location information over the air interface 627 from an AP (e.g., the AP 602) and/or determine its location based on the timing of the signals being received from two or more nearby base stations. It will be appreciated that the STA 601 may acquire location information by way of any suitable location-determination method while remaining consistent with an embodiment.

The processor 615 may further be coupled to other peripherals 623, which may include one or more software and/or hardware modules that provide additional features, functionality and/or wired or wireless connectivity. For example, the peripherals 623 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, and the like.

The STA 601 may include a full duplex radio for which transmission and reception of some or all of the signals (e.g., associated with particular sub-frames for both the UL (e.g., for transmission) and downlink (e.g. for reception) may be concurrent and/or simultaneous. The full duplex radio may include the interference management unit 625 to reduce and or substantially eliminate self-interference via either hardware (e.g., a choke) or signal processing via a processor (e.g., a separate processor (not shown) or via processor 615). Although, the WTRU 102, the STA 601, and the AP 602 are described separately, it is contemplated that any combination of the components, capabilities, functions and/or operation of the WTRU 102, the STA 601, and the AP 602 may be incorporated into a multi-mode device.

### Channel Access Scheme in 802.11

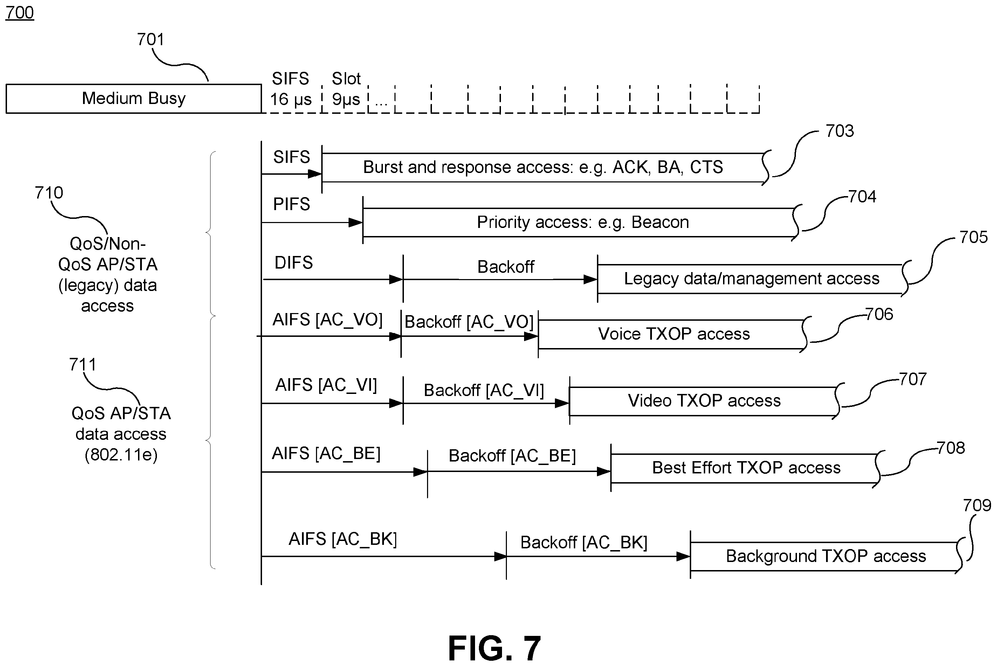

FIG. 7 is a diagram illustrating representative Enhanced Distributed Channel Access (EDCA) operations.

A channel access scheme may include EDCA operations, and may be an extension of a basic Distributed Coordination Function (DCF). The EDCA operations may support prioritized Quality of Service (QoS) and contention based access for a channel access scheme of a communication medium, e.g., a Radio Frequency (RF) channel. One or more EDCA operations, for example in 802.11n, are illustrated in FIG. 7.

A channel access scheme 700 (e.g., in 802.11) may be a point coordination function (PCF), which may use contention free channel access to support time-bounded services with polling of an STA (e.g., each STA) in the BSS by the AP. After a medium busy time period 701, in which the medium is being used by one or more STAs/APs, an AP may send a polling message after waiting for PCF inter frame spacing (IFS). If a client, such as a STA, has nothing to transmit, the client may transmit a null data frame. Additionally, after the medium busy time period 701, a QoS/Non-QoS AP/STA 710 may perform a data access. For example, the QoS/Non-Qos AP/STA, after waiting a Short IFS (SIFS), may perform a burst and response access 703, for example, by transmitting an acknowledgement (ACK), a block ACK (BA), and/or a clear to send (CTS), among others. The QoS/Non-QoS AP/STA 710 may also perform a priority access 704 after waiting a PCF IFS (PIFS), for example, by transmitting a beacon. The QoS/Non-QoS AP/STA 710 may perform a legacy data/management access 705, after a DCF IFS (DIFS) and a backoff period. A QoS AP/STA 711 may perform access based on different priorities and/or QoSs of different data types and/or access classes (ACs). For example, the QoS AP/STA 711 may perform a voice transmit opportunity (TXOP) access 706 to transmit voice data after waiting an arbitration IFS (AIFS) and a backoff for an AC for voice data (AC_VO). The QoS AP/STA 711 may perform a video TXOP access 707 to transmit video data after waiting an arbitration IFS (AIFS) and a backoff for an AC for video data (AC_VI). The QoS AP/STA 711 may perform a best effort (BE) TXOP access 708 to transmit BE data after waiting an arbitration IFS (AIFS) and a backoff for an AC for BE data (AC_BE). The QoS AP/STA 711 may perform a background (BK) TXOP access 709 to transmit BK data after waiting an arbitration IFS (AIFS) and a backoff for an AC for BK data (AC_BK).The PCF channel access scheme may be deterministic, fair, and/or efficient for both low duty-cycle and/or heavy/bursty traffic. A hybrid coordination function (HCF) controlled channel access (HCCA) may be an enhancement of the PCF in which the AP can poll a STA during one or both of a contention period (CP) and/or a contention-free period (CFP). The AP may transmit multiple frames under one poll, e.g., under one instance of polling an STA.

### High Efficiency WLAN (HEW)

HEWs may enhance the QoS users' experience, for example, in high-density scenarios (e.g., in the 2.4 GHz and/or 5 GHz bands). Potential applications for HEWs may include usage scenarios such as data delivery for stadium events, high user density scenarios such as train stations, and/or enterprise/retail environments, among others. Further usage scenarios may be based on an increased dependence on video and/or media content delivery, wireless services for medical applications, and/or other data-rich services.

### OFDMA in 802.11ax

Transmission and/or reception procedures, for example, in 802.11, which may also be referred to as Wi-Fi, systems, such as 802.11a/g/n/ac/ah, may use an entire allocated bandwidth for transmission and/or reception. In certain representative embodiments, Orthogonal Frequency Division Multiple Access (OFDMA) may be implemented in a WLAN to address inefficiencies caused by resource scheduling that allocates the entire allocated bandwidth (e.g., an entire channel) to a single user. A direct application of OFDMA to WiFi may introduce backward compatibility issues.

Coordinated Orthogonal Block-based Resource Allocation (COBRA) may introduce OFDMA methods and/or operations to resolve WiFi backward compatibility and may address inefficiencies caused by channel based resource scheduling. For example, COBRA may enable transmissions over multiple small frequency-time resource units. Multiple users may be allocated to non-overlapping frequency-time resource units, and may be enabled to transmit and/or receive simultaneously. A sub-channel may be generally defined as a basic frequency resource unit (e.g., a time/frequency resource) that an AP may allocate to a STA. For example, with consideration to backward compatibility for 802.11n and/or 802.11ac, among others, a sub-channel may be defined to be a 20 MHz channel. It is contemplated, that these sub-channels may have bandwidths less than 20 MHz or they may be limited to bandwidths of 20 MHz.

Technologies in COBRA may include multicarrier modulation, filtering, time domain, frequency domain, space domain, and/or polarization domains as the basis for the transmission and/or coding scheme. A COBRA scheme may be implemented using one or more of OFDMA sub-channelization, single carrier-frequency division multiple access (SC-FDMA) sub-channelization, and/or filter-bank multicarrier sub-channelization. According to an embodiment, to enable COBRA transmissions, any one or more of the following features may be implemented: (1) methods for coverage range extension; (2) methods of grouping users; (3) methods for channel access; (4) preamble designs for low overhead; (5) methods for beamforming and/or sounding; (6) methods for frequency and/or timing synchronization; and/or (7) methods for link adaptation.

Frequency and/or time synchronization algorithms for COBRA may be employed. For example, Multi-User Parallel Channel Access (MU-PCA) and Single User Parallel Channel Access (SU-PCA) schemes may include several methods, in addition to those implemented with COBRA.

For example, MU/SU-PCA may include a method for multi-user/single-user parallel channel access using transmit/receive operations with symmetrical bandwidth, which may allow for any of: (1) downlink parallel channel access for multiple/single users; (2) uplink parallel channel access for multiple/single users; (3) combined downlink and uplink parallel channel access for multiple/single users; (4) design to support unequal MCS and unequal transmit power for SU-PCA and/or COBRA; (5) PHY designs and/or procedures to support multi-user/single-user parallel channel access using transmit/receive with symmetrical bandwidth; and/or (6) mixed MAC/Physical (PHY) MU-PCA.

As another example, MU-PCA may include a method for MU/SU-PCA transmit/receive with asymmetrical bandwidth, which may allow for MAC layer designs and procedures for downlink, uplink and combined uplink and downlink for multi-user/single-user parallel channel access using transmit/receive with asymmetrical bandwidth; and/or PHY layer designs and procedures to support multi-user/single-user parallel channel access using transmit/receive with asymmetrical bandwidth. Additional techniques, such as scalable channel utilization in which STAs may scale their transmission bandwidths based on channel or traffic availability, may be implemented.

### Fixed and Dynamic CCA Adaptation

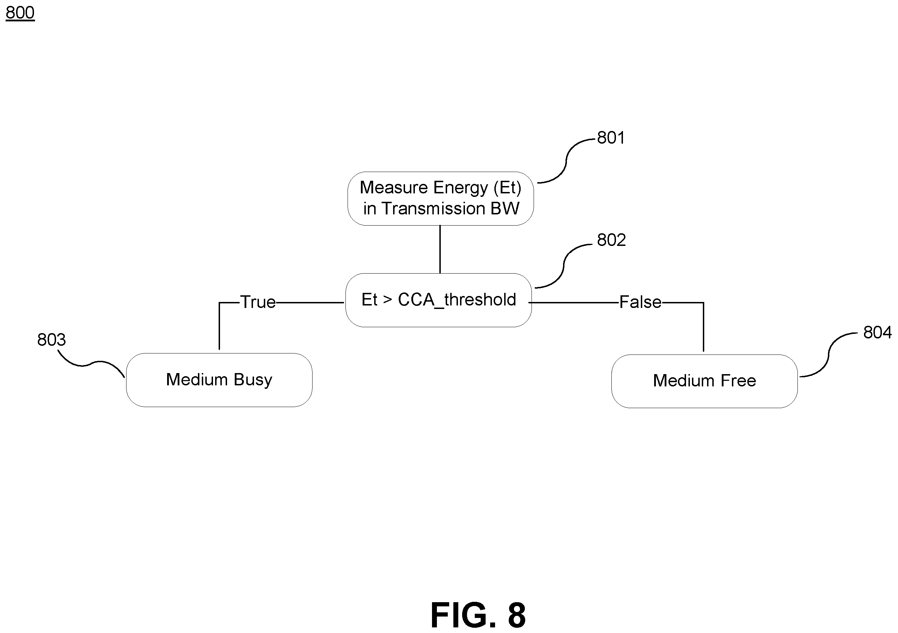

FIG. 8 is a diagram illustrating representative energy detect Clear Channel Assessment (CCA) operations.

Referring to FIG. 8, a CCA threshold may be used by a STA 601 and/or an AP 602 to decide whether a channel is available for use or not. For example, at operation 801, the STA 601 and/or the AP 602 may measure the energy, which may be referred to as transmission energy (Et), in a channel, for example, in a transmission channel or a transmission bandwidth (BW), in order to decide (e.g., determine) if the channel is available for transmission based on whether the energy in the channel exceeds the CCA threshold. The CCA threshold may be fixed or dynamic. At operation 802, the STA 601 and/or the AP 602 may determine whether the Et measured in operation 801 exceeds the CCA threshold. The STA 601 and/or the AP 602 may determine the medium to be busy, at operation 803, if the Et exceeds the CCA threshold, or may determine the medium to be free, at operation 804, if the Et does not exceed the CCA threshold.

### Representative Mobile Slotted Aloha (MS-Aloha)

MS-Aloha is contemplated as a hybrid solution between scheduled and unscheduled MAC packets, and may be classified among the packet-based and collision-free MAC methods. MS-Aloha may not include any reservations separate from data exchanges.

For example, MS-Aloha may be used in vehicle networks during connection and the set-up phases of a telephone call, e.g., phases including a reservation request, a confirmation, a data exchange, and/or tear-down, among others. MS-Aloha may be applied and/or employed based on one or more of the following conditions: (1) the received signal is hampered by hidden stations; (2) devices are difficult to manage due to high packet loss; (3) devices have mobility; and/or (4) devices have time varying channels, among others. MS-Aloha may be connection oriented and may continuously refresh the reservations (e.g., each reservation) with a STA transmitting during each period.

MS-Aloha, for example, may use a periodic frame structure, including fixed-length time slots, which may represent distinct resources to be allocated or/or used. The fixed-length time slots may be referred to as a "slotted" structure of time slots. MS-Aloha may include absolute synchronization, which may subtend a Coordinated Universal Time (UTC). Any node may know a current position in the frame based on the UTC and may know such independently of the frames received. The absolute synchronization may prevent time misalignment, signal misalignment and/or clock loops. To counteract propagation delays, MS-Aloha may include a guard-time. MS-Aloha frames, e.g., as considered by a receiver, may float within boundaries of an ideal time-slot. A header for the MS-Aloha frame may be used to properly recover the start of each MS-Aloha frame.

A node, for example, a WTRU and/or a STA, attempting to reserve a slot may pick a free slot, and may reserve a slot if the node is transmitting in a current frame and continues transmissions in next frame. A transmission may be an implicit reservation for the next frame. If a node is transmitting using a slot in a frame, a slot in the next frame will be reserved for, and may be used by, the transmitting node. If the node does not transmit using a slot in the current frame, the slot is unused and the slot in the next frame may be used by other nodes.

The use of OFDMA, for example in 802.11, may allow for techniques to enable scalable channel utilization and/or improved spatial re-use, among others. In certain representative embodiments, these techniques may enable be legacy devices (e.g., WTRUs, APs, STAs) compliant with an 802.11 standard to improve their spatial reuse and to implement sub-channel utilization.

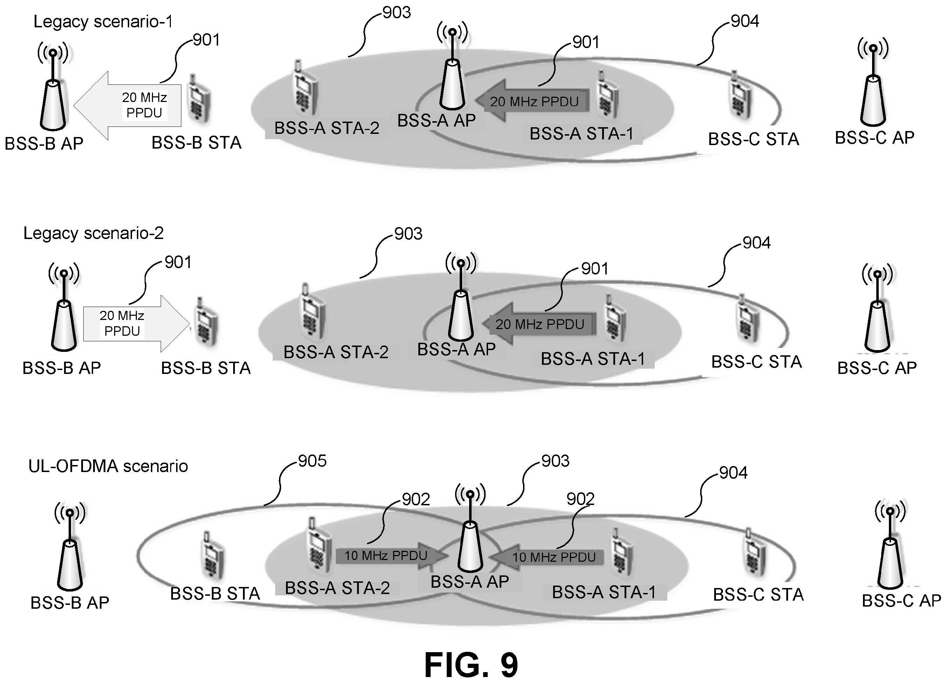

FIG. 9 is a diagram illustrating a reduced frequency reuse using OFDMA combined with legacy CCA procedures.

Referring to FIG. 9, an example scenarios are illustrated. A network, as illustrated in FIG. 9, may suffer from reduced frequency-reuse when OFDMA and existing standard CCA procedures are used. An AP and/or STA of BSS-B, in legacy scenarios-1 and 2, may be able to reuse the same 20MHz spectrum to transmit or receive packets, such as a 20 MHz Physical Layer Convergence Protocol (PLCP) Protocol Data Unit (PPDU) 901, since neither the BSS-B AP nor the BSS-B STA can sense the use of the 20MHz channel by either of BSS-A AP, in a BSS-A AP coverage area 903, and BSS-A STA-1, in a BSS-A STA-1 coverage area 904. In an UL-OFDMA scenario, BSS-A STA-1 and BSS-A STA-2 may respectively transmit packets to the BSS-A AP, such as 10 MHz PPDUs 902. As shown in FIG. 9, for example, the 10 MHz PPDUs 902 may be transmitted using adjacent 10MHz sub-channels. In such a case, the BSS-B STA, which is disposed in the BSS-A STA-2 coverage area 905, may not be able to communicate with (e.g., transmit/receive a packet to/from) the BSS-B AP, because the BSS-B STA may sense or detect ongoing communications performed by the BSS-A STA-2 in the BSS-A STA-2 coverage area 905, e.g., the transmitting of the 10MHz PPDU 902 via the 10 MHz sub-channel by BSS-A STA-2.

For example, the BSS-B STA will not be able to transmit/receive a packet because the BSS-A AP schedules the UL-OFDMA transmission from two STAs that are not in proximity of each other and because BSS-B STA, which is in proximity to one of the BSS-A STAs, by following the legacy CCA procedure to sense a 20MHz channel as a whole, may determine whether a medium is busy/idle.

In other words, in the uplink direction, the BSS-B STA may sense the channel busy and may not or will not transmit, although the BSS-B AP may receive the signal without any interference. In the downlink direction, if Ready To Send (RTS)/Clear To Send (CTS) is used, there may not or will not be a transmission from the BSS-B AP since the BSS-B STA may not successfully decode the RTS frame from the BSS-B AP, or because the BSS-B STA may sense that the channel is busy and not respond to the BSS-B AP with a CTS frame. If RTS/CTS is not used, the BSS-B AP may sense the channel to be idle and may transmit the signal. In such a case, the BSS-B STA may not be able to decode the signal successfully since half of the channel may be subject to interference by the signal from the BSS-A STA 2.

In a case where the BSS-A STA1 may be power limited, for example, in legacy scenarios, frequency reuse may be further reduced. When uplink OFDMA is used, the power may be scaled by a fraction based on and/or relative to the bandwidth (BW), and the two bold circles in the UL-OFDMA scenario, as illustrated in FIG. 9, may be larger than the red circle in the legacy scenarios. Larger circles may indicate more neighboring BSS STAs are being prevented from transmitting due to interference from neighboring devices.

### CSMA/CA with OFDMA

To use OFDMA systems for uplink transmissions in WLANs, one set of operations may include the AP as the scheduler and assigner of resources to different STAs. At the start (e.g., at every start) of an uplink OFDMA transmission, the AP may send a trigger frame to the scheduled STAs. The trigger frame may announce which STA is to or will transmit data and in which sub-channel such STA is to or will transmit data. Transmitting a trigger frame at every start of an uplink OFDMA transmission may cause any one or more of the following: (1) inefficient resource allocation may occur and/or result in scenarios where the STAs have very different amounts of data to transmit, or may transmit using different Modulation and Coding Schemes (MCSs) as a result of varying channel qualities, for example, in cases where a STA with a small amount of data may have to zero pad its transmission to equalize the packet transmission lengths; and/or (2) traffic delay may result from other STAs waiting to access the medium in scenarios where the transmission data frames are long. Methods that address inefficient resource usage due to padding of STAs with dramatically different amounts of data and channel access delay may be implemented to support CSMA/CA with OFDMA.

### Mechanisms for Alleviating Decrease in Reuse During OFDMA Based Transmissions in WLAN Systems

A network may suffer from a reduction of frequency-reuse when OFDMA and existing standard CCA procedures are used, as illustrated in FIG. 9.

Methods, apparatuses, such as STAs and APs, and systems may be implemented and/or employed to alleviate this reduction in frequency reuse. For example, the STAs may send control and/or management frames to their associated APs and may inform their associated APs of an Overlapping BSS (OBSS)/color observed by the STAs. This information may enable an AP to schedule uplink (UL)-OFDMA to STAs, which may be geographically closer to each other. For example, referring to FIG. 9, BSS-A STA1 may report its neighbor BSS, as BSS-C. BSS-A STA2 may report its neighbor BSS, as BSS-B. BSS-A AP, with the information on respective neighbor BSSs, may avoid scheduling these two STAs in the same UL-OFDMA transmission.

A STA may use passive and/or active procedures to discover and/or report, to its AP, its neighbor STAs that may be located close to itself. For example, a STA may passively and/or actively report neighboring STAs that are located in its geographical vicinity, and /or neighbors from which it can receive a strong signal.

According to an embodiment, in a representative passive procedure, a STA may discover and/or report neighbors which may be located in its geographical (and/or operating) vicinity, according to any one or more of the following procedures.

A STA, when receiving a packet, may extract information from one or more of: a preamble, a MAC header, a framebody, and/or any part of the received packet. The information that may be extracted by the STA from the received packet may include one or more of a MAC Address of the transmitting STA and/or the receiving STA, a BSSID, a BSS Color, an Association ID (AID), a Partial AID (PAID), a Group ID, and/or a received power of the packet, such as a received signal strength indicator (RSSI), a received channel power indicator (RCPI), and/or any other power measurements.

The receiving STA may record the extracted information in memory of all or a subset of the transmitting STAs that are the receiving STA's direct neighbor. For example, the receiving STA may record the extracted information, from some and/or all packets received from transmitting STAs that have a power level exceeding a received power level, RXₜₕᵣₑₛ. In certain examples, the receiving STA may record (e.g., record only) the transmitting STAs that are from the same BBS as the receiving STA. In various examples, the receiving STA may record (e.g., record only) the transmitting STAs that are from the same BSS as the receiving STA, and whose packets were received with a power level that exceeds (e.g., is above or below) a received power level, RXₜₕᵣₑₛ.

The received power level threshold, RXₜₕᵣₑₛ, may be determined based on an absolute received power measurement. For example, if it is known that the transmitting STA is using a uniform transmit power, the uniform transmitting power may be used to determine the RXₜₕᵣₑₛ. The received power level threshold, RXₜₕᵣₑₛ, may be indicated by power density in certain cases, such as in a case where the transmitting STAs perform transmissions using different channel widths. In certain embodiments, the received power level threshold, RXₜₕᵣₑₛ, may be adjusted for the actual transmit frequency bandwidth. Different transmit frequency bandwidths may be used, e.g., 1 MHz, 2 MHz, 2.5 MHz, 4 MHz, 5 MHz, 7.5 MHz, 8 MHz, 10 MHz, 20 MHz, 40 MHz, 80 MHz, 160 MHz, 80+80 MHz, and/or any bandwidth in between or any combinations thereof.

The received power level threshold, RXₜₕᵣₑₛ, may be determined based on the indicated transmit power, which may be included in the transmitted frame, or in any control frame, management frame, extension frame, NDP frame, Action frame, or any other similar and/or suitable frame, among others.

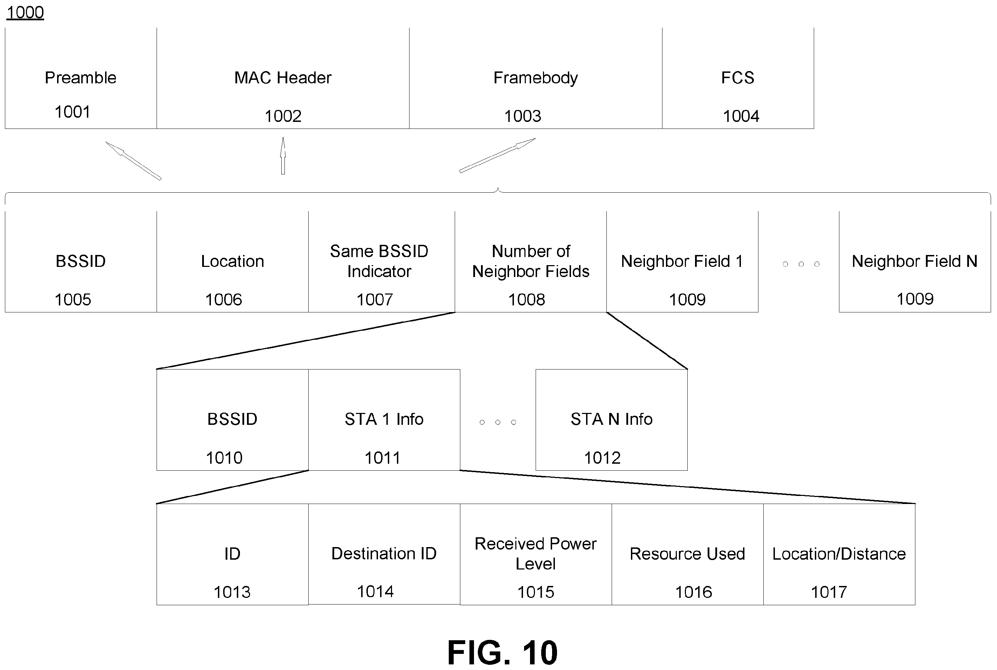

According to an embodiment, a passive procedure for discovering and/or reporting neighbors of a STA may include sporadically and/or periodically monitoring the medium to passively scan for neighboring STAs. The STA may monitor the medium for passively scanning neighboring STAs at the request of another STA, such as the AP or any other STA, from the same or another BSS. The STA may report the observed neighbors from its own BSS, and/or neighbors from neighboring BSSs, to any of: (1) its AP, (2) another STA, (3) a coordinating STA, and/or (4) a peer STA, among others. The STA may report the observed neighbors using a representative Neighbor Reporting element or frame, an example of which is shown in FIG. 10.

FIG. 10 is a diagram illustrating a representative Neighbor Report frame.

A STA, e.g., an AP, after collecting information on STAs that are located (e.g., geographically, communicatively and/or operationally) closely to each other, e.g., by or via receiving a set of Neighbor Reporting elements and/or frames from one or multiple STAs (e.g., neighboring STAs), may assign some or all of the STAs located close to each other into one or more multi-user groups, for example, a MU OFDMA group, and/or a High Efficiency (HE) MU OFDMA group. In certain examples, a STA may assign STAs that may be located close to each other (e.g., in the vicinity) and can overhear interference/packets from one or more OBSSs, e.g., a particular OBSS, into one multi-user group, for example, a MU OFDMA group, and/or a HE MU OFDMA group. In various examples, an AP, may assign STAs that can overhear interference/packets from one or more OBSSs, e.g., a particular OBSS, into one multi-user group, for example, a MU OFDMA group, and/or an HE MU OFDMA group.

A STA, e.g., an AP, may assign one or more resources, such as one or more particular channels, one or more sets of subcarriers, and/or one or more Resource Blocks (RBs) to a MU group, for example, a MU OFDMA group, and/or an HE MU OFDMA group, which may consist of or include STAs that may be located close to each other. MU groups may be used, and/or may be beneficial, for a group of STAs having a relatively fixed location for some period of time. A BSS and/or an AP (e.g., each BSS and/or AP) may maintain a set of resources, such as a set of subcarriers and/or RBs, relatively interference free, potentially in coordination with neighboring BSSs or APs. The set of resources may be assigned to STAs that may have higher mobility (e.g., that change BSSs and/or APs with a certain frequency threshold) and/or that may be transiting and/or that may be in a transit mode.

If a STA, e.g., an AP, is aware of a STA (e.g., any STAs), or groups of STAs from a particular OBSS, e.g. with a particular BSS Color, and/or BSSID, that may be overheard by one or more STAs in its own BSS, such as the STAs in a HE MU OFDMA group in the same BSS as the STA, the STA may provide such information to the AP or a STA in that particular OBSS as part of coordination process. For example, if the STA, e.g., the AP, is aware of an STA in a same BSS as the STA that overhears one or more STAs of an OBSS, the STA may report information on the STA that overhears one or more STAs of the OBSS to the AP and/or an STA of the OBSS. STAs, e.g., APs, in neighboring BSSs may coordinate such that the STAs (for example, from different HE MU OFDMA groups belonging to different BSSs which may cause interference between each other) are allocated different resources, such as RBs, TXOPs and/or time slots/access windows, so that inter-BSS interference may be reduced.

A STA, e.g., an AP or a coordinating STA, after receiving one or more Neighbor Report frames, may evaluate the resource allocation in its BSS using content of the Neighbor Report frames. A STA, e.g., an AP or a coordinating STA, after receiving a request for resource reallocation in one or more Neighbor Report frames, may evaluate the resource allocation in its BSS and/or may conduct resource reallocation using the content of the one or more Neighbor Report frames. Additionally or alternatively, a STA, e.g., an AP or a coordinating STA, after receiving one or more Neighbor Report frames, may conduct coordination with one or more OBSSs using the content of one or more Neighbor Report frames. A STA, e.g., an AP or a coordinating STA, after receiving a request for coordination/change, e.g., in one or more Neighbor Report frames, may evaluate the resource allocation in its BSS, may conduct coordination with one or more OBSSs using the content of one or more Neighbor Report frames, and/or may conduct resource reallocation in its own BSS.

Referring to FIG. 10, a Neighbor Report frame 1000 may contain or include one or more of the following fields: a preamble 1001, a MAC header 1002, a framebody 1003, and/or a Frame Check Sequence (FCS) 1004. One or more parts and/or fields of the Neighbor Report frame 1000 may contain or include one or more of the following information: (1) a BSS Identifier (BSSID) field 1005 that may be used to indicate the BSSID, compressed BSSID, BSS Color, and/or partial BSSID of the transmitting STA, or any kind identifier similar to a BSSID and/or a Service Set Identifier (SSID); (2) a location field 1006 that may be used to indicate a location of the reporting STA; (3) a same BSSID Indicator 1007 that may be used to indicate that the STAs contained or included in the Neighbor Report frame are from (e.g., all from) the same BSS as the transmitting STA or as the first neighbor indicated in the Neighbor Report frame; (4) a Number of Neighbor Fields field 1008 that may be used to indicate the number of Neighbor Fields contained or included in the Neighbor Report frame 1000; and/or (5) one or more Neighbor Fields 1009 from 1 to N, each of which may be used to indicate the information of one or more STAs that are close to or in the vicinity of the transmitting STAs, among others.

Each Neighbor Field may contain or include one or more of the following information: (1) a Same BSSID Indicator 1010 that may be used to indicate that the STAs indicated in each Neighbor Field belongs to the same BSS as the transmitting STA or that STAs indicated in each Neighbor Field belongs to the same BSS as the STAs indicated in the previous Neighbor Field, and if the Same BSSID Indicator is turned on, then the BSSID field may be skipped and/or may not be included; (2) a BSSID field 1011 that may be used to indicate the BSSID of the STA or STAs indicated in the Neighbor Field 909 (e.g., respective Neighboring Field, wherein the BSSID field may be skipped or may not be included if the Neighbor Report frame or the Neighbor Field contains or includes a Same BSSID Indictor that is turned on (e.g., at a first logic level) (the BSSID may be implemented as a BSSID, a compressed BSSID, BSS Color, a partial BSSID, any kind identifier of a BSSID, and/or an SSID, among others); and/or (3) STA 1-STA N fields 1012 that may be used to respectively indicate information for observed Neighbor STAs (e.g., each of, a portion of, or all observed Neighbor STAs).

Each of the STA fields may contain or include one or more of the following information: (1) an ID field 1013 that may identify the Neighbor STA or STAs, such as a MAC address, an AID, a Partial AID, a Group ID, and/or any other type of ID that the STAs and APs may agree on; (2) a Destination ID field 1014 that may identify the destination STA of the Neighbor STA or STAs (the Destination ID may be implemented as MAC address, an AID, a Partial AID, a Group ID, and/or any other type of ID that the STAs and APs may agree on) (e.g., the Destination ID may be used in case the Neighbor STA or STAs use different transmit powers when transmitting at different times or to different destinations; (3) received power information field 1015 that may be used to indicate a Received Power level (e.g., an absolute level, a relative level, a range, and/or an average, among others) at which the packets are received (the received power information may include a transmit power used by the Neighbor STA or STAs if the transmit power is known to the reporting STA); (4) resource used field 1016 including information that may be used to indicate the resource that Neighbor STA or STAs are observed to use, such as an access window, a beacon interval, time slots, a frequency bandwidth, one or more channels, one or more sets of subcarriers, and/or one or more RBs, among others; and (5) location/distance field 1017 including information that may be used to indicate a location and/or distance of the neighbor STA. The location/distance field 1017 may contain the location information of the neighbor STA. Additionally or alternatively, the location/distance field 1017 may contain a distance (for example, an estimated distance) of the neighbor STA from the reporting STA. Such a distance may be determined based on the reported location and the location of the reporting STA, or estimated based on received signals, such as a received power level.

The Neighbor Report frame, although not shown in FIG. 10, may contain or include one or both of the indicators: (1) Resource Reallocation Requested, and/or (2) Coordination/Change Requested. The Resource Reallocation Requested indicator may be used by the transmitting STA to request that the receiving STA (e.g., an AP) should or is to reallocate resources to itself, and the reallocation may be based on the content of the Neighbor Report frame. A Neighbor Report frame may contain or include one or more Coordination/Change Requested indicators that may be used to indicate to the receiving STA (e.g., an AP or a coordinating STA) that it is to conduct coordination on resource/scheduling with one or more OBSSs. Such coordination/change on resource scheduling may be conducted using the content of the Neighbor Report frame. A STA (e.g., an AP or a coordinating STA), after receiving one or more Neighbor Report frames, may evaluate the resource allocation in its BSS using the content of the Neighbor Report frames. A STA (e.g., an AP or a coordinating STA), after receiving a request for Resource Reallocation, e.g., in one or more Neighbor Report frames, may evaluate the resource allocation in its BSS and/or may conduct resource reallocation using the content of the Neighbor Report frames. Additionally or alternatively, a STA (e.g., an AP or a coordinating STA) may conduct coordination with one or more OBSSs using the content of the Neighbor Report frames, after receiving one or more Neighbor Report frames. A STA (e.g., an AP or a coordinating STA), after receiving a request for Coordination/Change, e.g., in one or more Neighbor Report frames, may evaluate the resource allocation in its BSS and conduct coordination with one or more OBSSs using the content of the Neighbor Report frames, and/or may conduct resource reallocation in its own BSS.

According to an embodiment, any part of the Neighbor Report frame or any combinations thereof may be implemented as a new control frame and/or a new management frame, such as Action Frames, Action No-Ack frames, and/or any other types of Management frames, Control frames, Extension Frames, NDP frames, NDP carrying MAC information frames, or any other similar and/or suitable frame type, among others. The Neighbor Report frame may be implemented as an Information Element (IE), a subelement, or a set and/or a subset of fields or subfields of a Management frame, Control frame, Extension frame, NDP frame and/or Data frames, and/or as a part of a MAC/PLCP header. The Neighbor Report frame or any part thereof may be sent as a part of an Aggregated MAC Protocol Data Unit (A-MPDU) or Aggregated MAC Service Data Unit (A-MSDU).

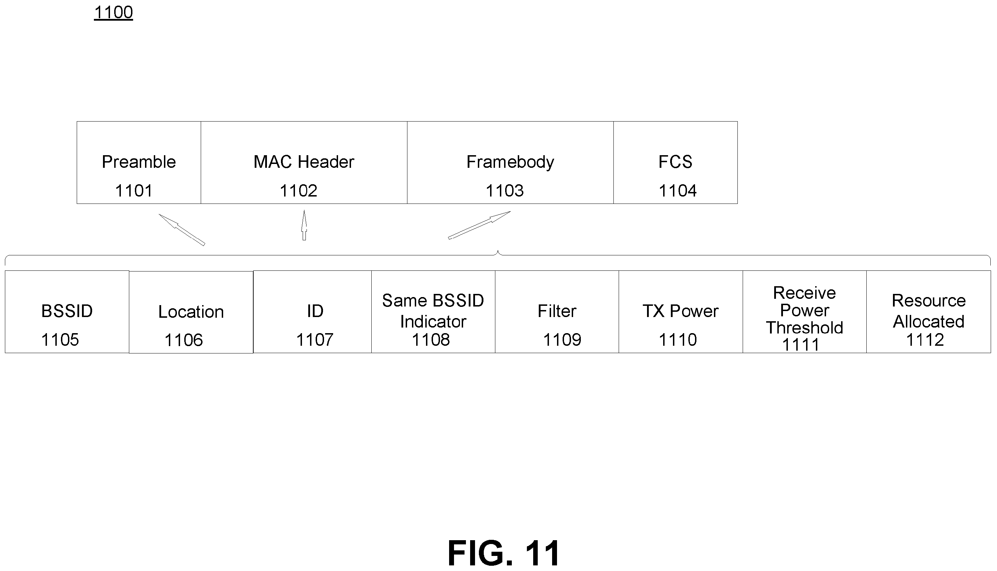

FIG. 11 is a diagram illustrating a representative discovery frame.

Referring to FIG. 11, a STA may use a Discovery frame 1100 to announce its presence to its neighbors so that the neighbors may determine the proximity of the transmitting STA. The Discovery frame 1100, according to an exemplary embodiment is shown in FIG. 11. The Discovery frame 1100 may contain or include one or more of the following the fields: a Preamble 1101, a MAC Header 1102, a framebody 1103, and/or a FCS 1104. One or more parts of the Discovery frame may contain or include one or more of the following information: (1) a BSSID field 1005 that may be used to indicate the BSSID, a compressed BSSID, a BSS Color, and/or a partial BSSID of the transmitting STA, any kind identifier of a BSSID and/or a SSID, among others; (2) a location field 1106 that may indicate a location of the transmitting STA; (3) an ID field 1107 that may identify the transmitting STA, such as a MAC address, an AID, a partial AID, a Group ID, and/or any other type of IDs that the STAs and APs may agree on; (4) a Same BSSID field 1108 Indicator that may indicate that the transmitting STAs is only soliciting responses from STAs of the same BSS; (5) a filter field 1109 that may be used for the transmitting STA to provide a filter so that STAs (e.g., only STAs) that satisfy the filter condition may respond to the Discovery frame 1100 (e.g., the filter may contain or include a Filter Type and/or a Filter Value, and the Filter Type may include a BSSID, a BSS Color, an SSID, a Group ID, a MAC Address, an AID, and/or a distance from the transmitting STA, among others); (5) a TX Power field 1110 that may be used to indicate the transmit power of the current frame; (6), a Received Power Threshold field 1111 that may be used to indicate the threshold of the received power (e.g., STAs that receive the Discovery frame at a power level that exceeds the indicated Received Power Threshold may respond to the Discovery frame); and/or (7) a Resource Allocated field 1112 that may be used to indicate resources (e.g., a time slot, a beacon interval, a frequency channel, a bandwidth, RBs, and/or a set of subcarriers, among others, that are allocated to the transmitting STA).

According to an embodiment, any part of the Discovery frame 1100, or any combinations thereof, may be implemented as a new control frame and/or a new management frame such as Action Frames, Action No-Ack frames, and/or any other types of Management frames, Control frames, Extension Frames, NDP frames, and/or NDP carrying MAC information frames. The Discovery frame 1100 may be implemented as an Information Element, sub-element, set or subset of fields or subfields of a Management frame, Control frame, Extension frame, NDP frame and/or Data frame, and/or as a part of a MAC/PLCP header. The Discovery frame 1100 or any part thereof may be sent as a part of an A-MPDU or A-MSDU. It is contemplated that the Discovery frame 1100 may be transmitted encrypted. In certain representative embodiments, the Discovery frame 1100 may be transmitted unencrypted, for example, to ensure that the intended neighbor STAs may be able to decode the frame.

According to an embodiment, an active procedure may be used by an STA to announce its presence, and to discover and report its neighbors that are located in its geographical or communication and/or operational vicinity according to any one or more of the following procedures.

A STA may transmit a Discovery frame to announce its presence to its neighbors. The transmission of a Discovery frame may be random, periodic, or based on a request by another STA (e.g., the AP). An example architecture/design of the Discovery frame is shown FIG. 10. In certain embodiments, a STA may transmit a Null Data Packet (NDP) frame as its Discovery frame. A STA may solicit a response from neighbor STAs that are proximate by indicating a Receive Power Threshold level in the Discovery frame. A STA may solicit a response from neighbor STAs that belong to the same BSS by turning on the Same BSSID Indicator, e.g., by setting the Same BSSID Indicator to "1", in the Discovery frame.

A STA may solicit a response from a set of neighbors by adding a filter corresponding to one or more of a BSSID, a BSS Color, a SSID, a Group ID, a MAC Address, and/or an AID in the Discovery frame. For example, the filter may identify neighbors from one or more BSSs, one or more SSIDs, one or more Group IDs, a range of MAC Addresses, and/or a range of AIDs, among others.

A neighbor STA, when receiving a Discovery packet, may extract one or more of the following information from a preamble, a MAC header, and/or any part of the received Discovery packet: (1) a MAC Address of the transmitting STA and/or of the receiving STA; (2) a BSSID; (3) a partial AID (PAID); (4) a Group ID; and/or (5) received power of the packet, such as a RSSI, a RCPI, and/or any other power measurements.

The STA may record the information of all or a subset of the transmitting STAs provided in the received Discovery packets, as direct neighbors of the STA. For example, a receiving STA may record (e.g., record only) in memory the transmitting STAs (e.g., an identifier of the transmitting STAs) provided in the Discovery packets received that are above and/or exceed a certain received power level, RXₜₕᵣₑₛ, which may be indicated in the Discovery frame. In certain examples, the STA may record (e.g., only record) the transmitting STAs (e.g., STA identifiers) from the same BBS as itself. In various examples, the STA may record (e.g., only record) the transmitting STAs from the same BBS as itself and whose packets were received and are above and/or exceed the RXₜₕᵣₑₛ. In some embodiments, the STA may record the transmitting STAs (e.g., STA identifiers) of all packets received that are above and/or exceed the RXₜₕᵣₑₛ.

The RXₜₕᵣₑₛ may be determined based on an absolute received power measurement (e.g., if it is known that the transmitting STA is using a uniform transmit power). The RXₜₕᵣₑₛ, may be indicated by a power density, for example on condition that the transmitting STA may be transmitting using different channel width, and/or the RXₜₕᵣₑₛ, may be adjusted for the actual transmit frequency bandwidth. The different transmit frequency bandwidths may be, e.g., 1 MHz, 2 MHz, 2.5 MHz, 4 MHz, 5 MHz, 7.5 MHz, 8 MHz, 10 MHz, 20 MHz, 40 MHz, 80 MHz, 160 MHz, 80+80 MHz, and/or any bandwidth in between or any combinations thereof.

The RXₜₕᵣₑₛ, may be determined based on indicated transmit power, which may be included in the transmitted Discovery frame, and/or in any control frame, management frame, extension frame, NDP frame, Action frame, and/or similar frame. The STA may sporadically or periodically monitor the medium for scanning neighboring STAs. The STA may monitor the medium for scanning neighboring STAs at the request of another STA, such as the AP, or another STA from the same or another BSS.

A STA, after receiving a Discovery frame that solicits a response frame, may respond with a response Discovery frame. For example, the STA may respond with the response Discovery frame if the STA satisfies the filter (e.g., all of the filters) and/or criteria indicated in the Discovery frame. In certain embodiments, the response Discover frame may be conditioned on responding criteria determined at the receiving STA. The timing of the transmission of the response Discovery frame may be scheduled and/or set with a random delay (e.g., to assist in preventing different STAs from responding simultaneously). In certain embodiments, a STA, after receiving one or more Discovery frames that solicits a response frame, may respond by transmitting a Neighbor Report frame to another STA, e.g., its AP, if the STA satisfies the filter and criteria indicated in the Discovery frame. In certain embodiments, the response Discover frame may be conditioned on responding criteria determined at the receiving STA. The timing of the transmission of the Neighbor Report frame may be scheduled and/or set with a random delay (e.g., to assist in preventing different STAs from responding simultaneously).

The STA may report the observed neighbors of its own BSS, and/or observed neighbors from neighboring BSSs, to its AP, and/or one or more of: another STA, a Coordinating STA, and/or a Peer STA. The STA may report such information using a Neighbor Reporting element or Neighbor Reporting frame, an example of which is shown in FIG. 9.

A STA (e.g., an AP) may collect information on STAs that may be closely located to each other (e.g., through receiving a set of Neighbor Reporting elements, Neighbor Reporting frames, and/or Discovery frames) from multiple STAs. After collecting such information, the STA may assign STAs determined to be and/or located close to each other into one or more multi-user groups, for example, a MU OFDMA group, and/or a HE MU OFDMA group. In certain examples a STA (e.g., an AP) may assign STAs that may be located close to each other and that can overhear interference/packets from one or more OBSSs (e.g., a particular OBSS) into one or more multi-user groups, for example, a MU OFDMA group, and/or a HE MU OFDMA group. In various examples, an AP may assign STAs that can overhear interference/packets from one or more OBSSs (e.g., a particular OBSS) into one or more multi-user groups, for example, a MU OFDMA group, and/or a HE MU OFDMA group.

A STA (e.g., an AP) may assign one or more resources, such as one or more particular channels, one or more sets of subcarriers, and/or one or more Resource Blocks (RBs) to one or more MU groups, for example, a MU OFDMA group, and/or a HE MU OFDMA group, which may consist of or include STAs that are located close to each other. Such MU groups may be beneficial for a group of STAs with a relative fixed location for some period of time (e.g., exceeding a threshold period of time). Each, some, or all BSSs and/or APs may maintain a set of resources, such as some set of subcarriers and/or RBs, relatively interference free, potentially in coordination with neighboring BSSs or APs. Such a set of resources may be assigned to STAs that may have a higher mobility (e.g., based on mobility parameters), and that may be transmitting and/or may be in a transmission mode.

If a STA (e.g., an AP) is aware of any STAs, or group of STAs from a particular OBSS, that can be overheard by one or more STAs in its own BSS, such as the STAs in a HE MU OFDMA group in its own BSS, the STA may provide such information to the AP or a STA in that particular OBSS as part of coordination process and/or operation. STAs (e.g., APs) in neighboring BSSs may coordinate such that STAs, for example, from HE MU OFDMA groups that belong to different BSSs and that can cause interference to each other, may be allocated different resources such as different RBs, different TXOPs and/or different time slots/access windows, for example, so that inter-BSS interference may be reduced. A STA (e.g., an AP or a coordinating STA), after receiving one or more Neighbor Report frames, may evaluate the resource allocation in its BSS using the content of the Neighbor Report frames.

A STA (e.g., an AP or a coordinating STA), after receiving a request for Resource Reallocation (e.g., in one or more Neighbor Report frames), may evaluate the resource allocation in its BSS and may conduct a resource reallocation using content of the Neighbor Report frames. Additionally or alternatively, a STA (e.g., an AP or a coordinating STA), after receiving one or more Neighbor Report frames, may conduct coordination with one or more OBSSs using the content of the Neighbor Report frames. A STA (e.g., an AP or a coordinating STA), after receiving a request for coordination/change (e.g., in one or more Neighbor Report frame), may evaluate the resource allocation in its BSS, conduct coordination with one or more OBSSs using the content of the Neighbor Report frames, and may conduct resource reallocation in its own BSS.

In certain representative embodiments, procedures may be implemented to configure a STA to transmit and/or receive when part of the 20MHz channel is busy by establishing new or modified CCA procedures. These CCA procedures for a sub-20MHz channel may include the use of PHY preambles. The PHY preamble may be enhanced to facilitate a more flexible frequency reuse in sub-20MHz CCA, for example, by echoing the BW/tone assignments from the AP in the PHY preamble. The echoing of the BW/tone assignments may facilitate a STA in a neighbor BSS to correctly and/or quickly determine which frequency resources are not occupied. For example in FIG. 8, the BSS-B STA and BSS-C STA in the UL-OFDMA scenario, which cannot hear from BSS-A AP, may benefit from this information which may be carried in 10MHz UL PPDUs' preambles from BSS-A STA2 and/or BSS-A STA1.

According to an embodiment, for the DL transmission in the OBSS, the OBSS STAs may reply to the bandwidth-signalling RTS transmitted by an OBSS AP over multiple 20MHz channels as described below with reference to FIG. 8. If a CTS frame and/or a NDP frame is used to reply to a non-High Throughput (HT) duplicate RTS initiating a DL transmission from BSS-B/C AP over multiple 20MHz channels, the CTS frame and/or the NDP frame may include one or more of the following information: (1) available sub-20MHz frequency resources in the 20 MHz channel not used by BSS-B; (2) timing adjustment for the DL data frame; (3) the PPDU length limit, e.g., upper and/or lower limit; (4) a RSSI of the sub-20MHz channel used by an OBSS; and/or 4) signal configuration parameters of the sub-20MHz channel used by an OBSS, among other information.

For example, if the BSS-B STA and/or the BSS-C STA of the UL-OFDMA scenario in FIG. 8, is able to receive a bandwidth-signalling RTS frame and/or NDP frame in adjacent/different channels from which BSS-B operates, the BSS-B STA and/or the BSS-C STA, for the 20MHz channel used by BSS-B, may reply with a CTS frame and/or NDP frame containing or including one or more the following information: (1) an indication, to their respective BSS-B/C APs, of which resource data frame can be received without interference; (2) an indication, to the BSS-C/B AP, of an adjustment relative to the OFDM symbol boundary in the RTS frame such that the received DL data frame can be aligned with the OFDM symbols sent by the BSS-A STA1 and/or STA2, minimizing inter-symbol interference from BSS-A STAs' UL frames; (3) an indication, to the BSS-B and/or the BSS-C AP, of constraints on the length of the DL data such that the BSS-B and/or BSS-C STAs may not transmit an ACK for a DL frame at the same time that the BSS-A STA1 and/or the BSS-A STA2 may receive their ACKs; (4) an indication, to the BSS-B and/or BSS-C APs, of the signal strength, via e.g., a RSSI, which may be introduced by an Adjacent Channel Interference (ACI) of the occupied sub-channel. The BSS-B and/or BSS-C APs may choose to change transmit power of an MCS level for reliable signal reception at their STAs; and (5) an indication, to the BSS-B and/or BSS-C APs, of the other signal configuration parameters (e.g., a FFT size, and/or a GI length, among others), for example, to avoid ACI due to inconsistent use of system parameters between the adjacent channels and/or sub-channels.

### Representative Procedures for CSMA/CA Using OFDMA

In certain representative embodiments, procedure of STAs contesting for a medium may be implemented. For example, different STAs may compete for sub-channels (e.g., each, a portion and/or all sub-channels) at the beginning of a frame. In certain representative embodiments, a resource contention method for a sub-channelized transmission may be implemented using a Mobile Slotted Aloha procedure. In certain representative embodiments, the above procedures may be modified, for example, to combat interference from hidden nodes.

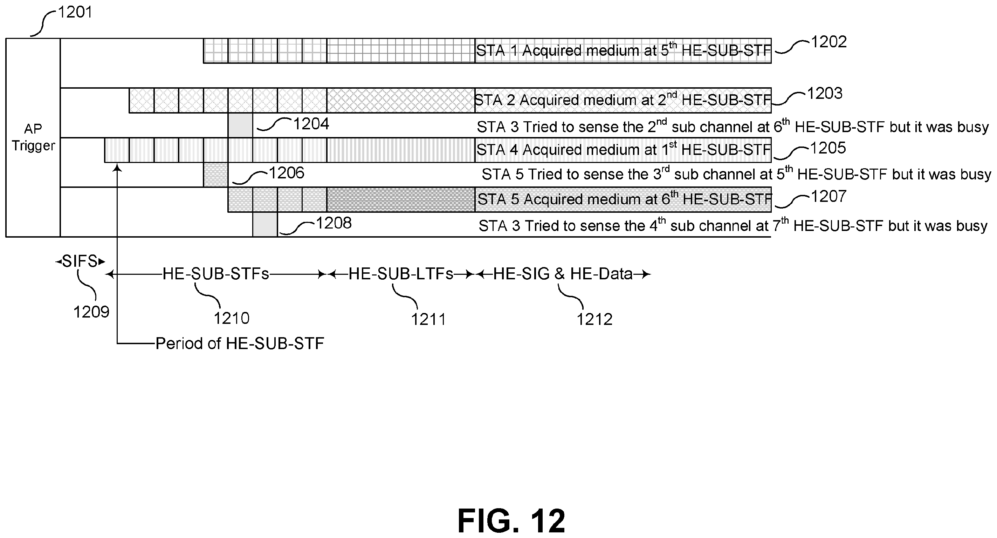

FIG. 12 is a diagram illustrating sub-channelized Carrier Sense Multiple Access (CSMA) operations.

Referring to FIG. 12, sub-channelized CSMA operations may be performed according to the following procedure. A STA (e.g., each STA, a portion of the STAs, or all of the STAs) may have a preferred transmission sub-channel. In certain embodiments, the STAs may have a common sub-channel as their preferred transmission sub-channel. The STA may have any number of prioritized, preferred sub-channels (e.g., second, third, and Mth preferred sub-channels). For example, each STA may have M ordered, preferred sub-channels labeled from 1, 2..., M. When the AP knows or determines that multiple STAs have data to be sent in an UL, the AP may send a trigger frame 1201, which may be referred to as an AP trigger 1201 or AP trigger frame 1201, for a UL-OFDMA transmission. The trigger frame 1201 may contain or include a legacy preamble for reserving a transmit opportunity (TXOP) for the length of the following uplink OFDMA frame. After the trigger frame 1201 and a SIFS duration 1209, N STF-periods, which may also be referred to as HE-SUB-STF periods 1210, are reserved for STF transmission. A maximum number of N STF-periods may be 10, 15, 20, and/or any other similar and/or suitable number of STF periods. The STFs may have a periodicity of 0.8, 1.6, 3.2, and/or any other similar and/or suitable number of microseconds.

In contending for a chance for transmission in any sub-channel, each STA may generate a random integer, y, from a uniform distribution U[0, N]. If y < x, where x is a function of the traffic access category, the sub-channel ID and/or max periods N, the STA may backoff for y periods. Each STA may be contesting, e.g., contending, for, and/or acquiring a sub-channel in the same transmission band. The units for backoff for each STA are periods of HE-SUB-STF. An example for x, which is a function of the traffic access category, may be xsub_id = min(N, AC-Psub_id).

If data is of higher Access Category (AC), the value of x may be higher, and if the STA has a priority in one of the sub-channels (e.g., a lower priority number, Psub_id), the value of x for that sub-channel may be higher. The value of x may have an upper bound based on N. For example, the value of x may be upper bounded by N, which is a maximum number of STF periods. The number xsub_id may determine the priority of that STA in the sub-channel indicated by the sub_id. Any other suitable and/or similar linear or non-linear function of N, AC, Psub_id may be used to compute the value of x. Additionally, without loss of generality, a reverse logic may be applied, in which a lower value of x may represents higher priority. For that logic, the random integer generated by the STA would have to be greater than the priority xsub_id. Just before the transmission, the STA may perform a CCA on the sub-channel indicated by the sub_id. The method and thresholds of such a CCA may be similar to the method described above.

If the sub-channel is determined to be clear, the STA may send N-y HE-SUB-STFs, which may correspond to a remaining amount of allotted time. Transmission of STFs from all STAs may be finished at the same time, which is when they, e.g., each of the STAs, may send a sub-channelized LTF, which is part of a physical layer convergence protocol (PLCP) header, to assist in estimation of the sub-channel at the AP. In the event of a collision, the value of Psub_id or x may be changed (e.g., decreased or increased). A collision may indicate the presence of hidden node, such that the priority for that STA in that sub-channel may be reduced.

If the sub-channel was not clear, the STA may attempt to sense another prioritized and/or preferred channel (the channel which is preferred second or the channel which is preferred third, among others) assigned to it by the AP. If there are no existing transmissions on the particular channel being sensed, the STA may send one or more remaining STF on the channel and continue with the data transmission. In certain embodiments, the STA may defer the transmission to the next available uplink trigger.

Referring to FIG. 12, for example, the AP 602 may transmit the AP trigger 1201. After a SIFS duration 1209, following the AP trigger frame 1201, STAs 1 through 5 may contend for and/or may acquire a sub-channel. The STA 1 may acquire a medium, e.g., a first sub-channel, at the fifth HE-SUB-STF during operation 1202. The STA 2 may acquire another medium, e.g., a second sub-channel, at the second HE-SUB-STF during operation 1203. At operation 1204, the STA 3 may sense the second sub-channel at the sixth HE-SUB-STF, and may determine that it is busy. The STA 4 may acquire a medium, e.g., a third sub-channel, at a first HE-SUB-STF, during operation 1205. At operation 1206, The STA 5 may try to acquire a medium, e.g., a third sub-channel at a fifth HE-SUB_STF, but may determine that the third sub-channel is busy. The STA 5 may acquire a medium, e.g., a fourth sub-channel, at the sixth HE-SUB-STF, at operation 1207. At operation 1208, STA 3 may sense the fourth sub-channel, at a seventh HE-SUB-STF and determine that it is busy. The STAs 1 through 5 that have respectively acquired a medium may respectively transmit HE-SUB-LTFs 1211 and HE-SIG and HE-Data 1212 after respectively transmitting the HE-SUB-STFs 1210.

In certain representative embodiments set forth herein, overhead used for scheduling may be reduced, while remaining fair to all of the STAs. If there are hidden nodes, and if the hidden nodes transmit at the same time on the same sub-channel, there may be contention. To minimize any contention, the AP may avoid assigning the same preferred sub-channels to STAs which the AP may have sensed to be on two physically opposite sectors.

The data-length duration may be assigned and may be announced by the AP in the trigger frame. It is contemplated that if the STA awakes from sleep, the STA may scan complete bands to check if there is an ongoing transmission on any of the bands. The STA may presume an ongoing transmission from a hidden node and refrain from transmission on any sub-channel until the next trigger frame.

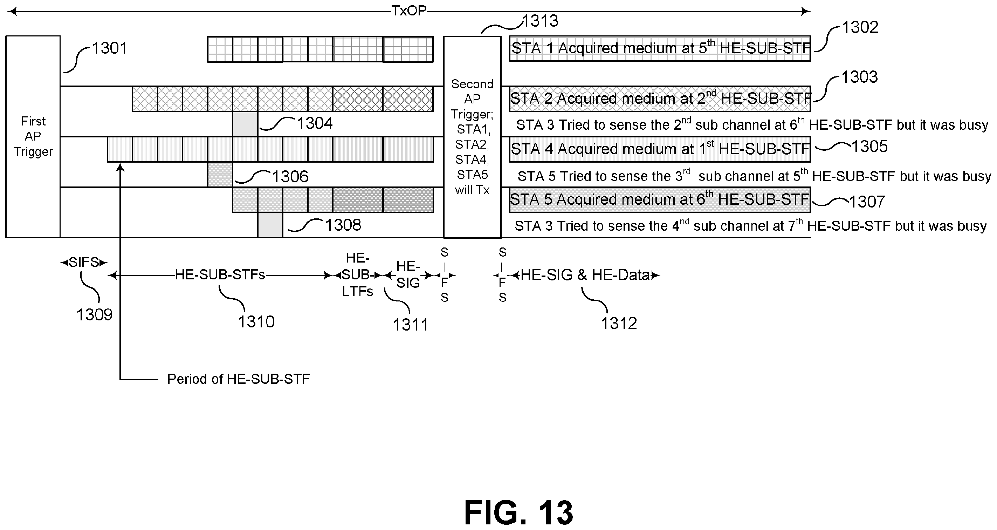

FIG. 13 is a diagram illustrating representative sub-channelized CSMA operations with a double trigger.

Referring to FIG. 13, sub-channelized CSMA operations may be performed using a double trigger, for example to avoid hidden nodes, according to the following:.

A trigger frame 1301, which may be referred to as a first AP trigger frame 1301 or first AP trigger 1301, may be sent by the AP 602, and may be considered to be a trigger to start the CSMA backoff process in a sub-channel (e.g., each sub-channel). Once a STA (e.g., STA 1, STA 2, STA 3, STA 4 or STA 5 or each STA 1-5) has finished competing for sub-channels and has acquired sub-channels, the STA (e.g., STA 1) may send a SIG field with their information to the AP 602. The information may include their own Partial-AID (PAID), and using the PAID information, the AP 602 knows and/or may determine which STAs (e.g., STA 1, STA 2, STA 3, STA 4 and/or STA 5) have acquired the medium. If there were any collisions in any sub-channels because of hidden nodes, the AP 602 may not be able to decode the SIG in that sub-channel and, may know about the collision. In this case, the AP 602 may not allocate that sub-channel to any STA (e.g., STA 1). If no node (e.g., STAs), contended for any specific sub-channel, the AP 602 may not allocate the sub-channel. According to certain embodiments, the AP 602 may allocate the sub-channel to a safe STA (e.g., STA 1), for example, a STA that the AP 602 may know and/or may have determined does not suffer from hidden nodes.

The AP 602 may announce the ID and the allocated sub-channel of the one or more STAs (e.g., STA 1, STA 2, STA 3, STA 4 or STA 5) that have acquired TXOP in a second trigger frame 1313, which may be referred to as a second AP trigger frame 1313 or second AP trigger 1313. The announcing of the one or more IDs, using the second trigger frame 1313, may be generally referred to as a group clear-to-send (G-CTS) frame. The TXOP may be for a DL-OFDMA frame. This frame may have a PLCP header (e.g., only a PLCP header) and may include a sub-channelized or regular SIG field. All STAs may be able to read either the channelized SIG field (for example, a combined SIG field containing common and individual information for each/all STA (e.g., STA 1, STA 2, STA 3, STA 4 and/or STA 5), transmitted across all the sub-channels) or the sub-channelized SIG field (for example, a sub-channelized SIG field transmitted for each STA (e.g., STA 1, STA 2, STA 3, STA 4 or STA 5) within it's sub-channel) so that respective STAs may determine if they acquired a TXOP. The STAs (e.g., STA 1, STA 2, STA 3, STA 4 or STA 5) may acquire data to be transmitted during the TXOP, until the end of the TXOP. The STAs (e.g., STA 1, STA 2, STA 3, STA 4 or STA 5) may zero pad the data in an event that the buffer is empty.

Referring to FIG. 13, for example, the AP 602 may transmit the AP trigger frame 1301. After a SIFS duration 1309, following the AP trigger frame 1301, STAs 1 through 5 may contend and/or acquire a sub-channel. The STA 1 may acquire a medium, e.g., a first sub-channel, at the fifth HE-SUB-STF, from among HE-SUB-STFs 1310, during operation 1302. The STA 2 may acquire another medium, e.g., a second sub-channel, at the second HE-SUB-STF during operation 1303. At operation 1304, the STA 3 may sense the second sub-channel at the sixth HE-SUB-STF, and may determine that it is busy. The STA 4 may acquire a medium, e.g., a third sub-channel, at a first HE-SUB-STF, during operation 1305. At operation 1306, the STA 5 may try to acquire a medium, e.g., a third sub-channel at a fifth HE-SUB_STF, but determines that the third sub-channel is busy. The STA 5 may acquire a medium, e.g., a fourth sub-channel, at the sixth HE-SUB-STF, at operation 1307. At operation 1308, the STA 3 may sense the fourth sub-channel, at a seventh HE-SUB-STF and determine that it is busy. The STAs 1 through 5 may receive the second AP trigger 1313, which indicates, respectively, IDs and allocated sub-channels for the STAs 1 through 5 that have respectively acquired a medium. The STAs 1 through 5 that have received allocation information via the second AP trigger 1313, for example, the STA 1, the STA 2, the STA 4, and the STA 5, as shown in FIG. 13, may respectively transmit HE-SUB-LTFs and HE-SIG 1311 and the HE-SIG and HE-Data 1312.

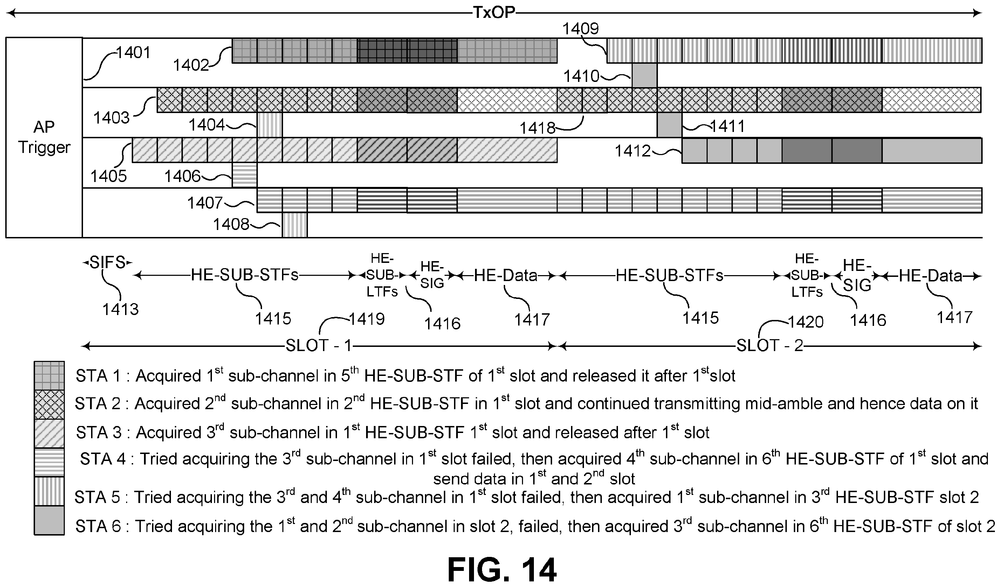

FIG. 14 is a diagram illustrating a representative slotted sub-channelized CSMA operation.

Frames may be lengthened (e.g., approximately 4 times longer as compared to previous WLAN PHY standards), this may increase a duration of each PPDU. In the case of time varying channels, the channel may vary during the transmission of the PPDU. A mid-amble may be implemented, for example to correct for channel estimation errors due to the time varying channels. The mid-amble may use part of a PLCP header and may be repeated one or more times during the middle of the frame. The mid-amble may be sub-channelized. As a derivative, the mid-amble may create slots in the existing transmission. These slots may allow other STAs to compete for a sub-channel during an existing transmission, if a transmission, (e.g., a part of the existing transmission, on that sub-channel is over).

Unlike MS-Aloha mentioned above, WLAN frames do not have 'Coordinated Universal Time'. The HE-SUB-STFs in the mid-ambles may serve as an anchor for the other STAs to join ongoing transmissions at free sub-channels. STAs, which may have data to send in an uplink, but do not have a TXOP, may constantly sense for the absence of power for an ongoing sub-channelized transmission. If a sub-channel is found to be empty, the STA waits for the HE-SUB-STFs of mid-ambles on the other sub-channels to start contention and/or competition for a sub-channel. Each STA may have their preferred transmission sub-channel, and multiple STAs may have a same sub-channel (e.g., a common sub-channel) as their preferred transmission sub-channel. Each STA may have second and/or third preferred sub-channels. In one example, each STA may have M ordered and preferred sub-channels, labeled from 1, 2..., M. When an AP knows and/or determines that multiple STAs have data to be sent in the uplink, the AP may send a trigger frame for an uplink-OFDMA. This trigger frame may include schedule information about which STAs may transmit on which sub-channels.

In certain representative embodiments, the trigger frame may indicate (e.g., may only or just indicate) a start of the contention period and the STAs may contend for the sub-channels as described above. The trigger frame may contain or include a legacy preamble reserving a TXOP for the length of following sub-channelized frame. Each STA may transmit a sub-channelized PLCP header including sub-channelized SIG and a predefined number of data-OFDMA symbols (e.g., *d*_segment). The number of data OFDMA symbols (*d*), may be negotiated within each BSS or Extended Service Set (ESS). In certain embodiments, *d*, may be preset. It is contemplated that a mid-amble may be inserted after *d*_segment number of data OFDMA symbols. If the STAs have more data to send after *d*_segment number of OFDMA symbols, they may reacquire the sub-channel by sending the mid-amble and may continue to send data over the same sub-channel. If any STA does not have more data to send in the uplink after sending the d_segment number of OFDMA symbols, it may refrain from sending the mid-amble. This may imply releasing the sub-channel.

STAs, which were not able to transmit in this segment of the frame, may monitor the sub-channel availability at each mid-amble. As multiple STAs may be waiting for sub-channel to be available, the STAs may compete for it. If one of the sub-channel was released (e.g., just released) and the STA has data to send, the STA may generate a random integer y from a uniform distribution U[0, N] as described herein. If y < x (where x is a function of the access category, the sub-channel ID and/or max periods (N), the station back offs for y periods. Before the transmission, the STA may perform CCA on that sub-channel again. If the sub-channel is or was found to be clear, the STA may send N-y STFs, which may align with mid-amble of HE-SUB-STFs from the other STA that may have reacquired medium for the continuous transmission. The STA and other STAs may send mid-amble LTFs (e.g., sub-channelized LTFs, which may be part of the mid-amble PLCP) to re-estimate the channel. If the sub-channel is or was not clear, The STA may sense another preferred channel (e.g., the second preferred channel relative to the prioritization of the preferred channels) assigned to it. If there is no ongoing transmission on that preferred channel, the STA may send a remaining STF and data on that preferred channel.

The STA may continue to use the sub-channel until the main TXOP for the AP is completed (e.g., over). This channel assignment scheme may enable continuous transmission of data and may enable long frames with reduced overhead like MS-Aloha. The channel assignment scheme may maintain CSMA like fairness to the STAs (e.g., all of the STAs). If hidden nodes exist and if the hidden nodes transmit at the same time on the same sub-channel, contention may exist. To minimize such contention, the AP may avoid assigning the same preferred sub-channels to different STAs which the AP sensed and/or determined to be on two physically opposite sectors (directions) relative to itself. In this representative embodiment, the number of OFDMA symbols (*d*_segment) between each mid-amble and/or preamble and mid-amble may be known, preassigned or announced by AP in the trigger frame. It is contemplated that if the STA awakes from sleep, the STA may scan complete band and if there are ongoing transmission in any of the band, the STA may determine that the existing transmissions are from hidden node and may refrain from transmission on any sub-channel until the next trigger frame.

Referring to FIG. 14, for example, an AP 602 may transmit the AP trigger frame 1401. After a SIFS duration 1413, following the AP trigger frame 1401, STAs 1 through 6 may contend for and/or acquire a sub-channel. The STA 1 may acquire the first sub-channel at the fifth HE-SUB-STF, from among HE-SUB-STFs 1415 of a first slot 1419, and may release the first sub-channel after the first slot 1419 ends, during operation 1402. The STA 2 may acquire the second sub-channel at the second HE-SUB-STF during the first slot 1419, may transmit a mid-amble 1418, for example, by transmitting HE-SUB-STFs 1415 during a second slot 1420, and may continue transmitting HE-SUB-LTFs and HE-SIG 1416, as well as HE-Data 1417, during the second slot 1420, during operation 1403. At operation 1404, the STA 5 may sense the second sub-channel at the sixth HE-SUB-STF of the first slot 1419, and may determine that it is busy. At operation 1408, the STA 5 may sense the fourth sub-channel at the seventh HE-SUB-STF of the first slot 1419, and may determine that it is busy.

The STA 3 may acquire the third sub-channel at a first HE-SUB-STF of the first slot 1419, during operation 1405, and may release the third sub-channel after the first slot 1419 ends. At operation 1406, the STA 4 may try to acquire the third sub-channel at a fifth HE-SUB_STF of the first slot 1419, and may determine that the third sub-channel is busy. The STA 4 may acquire the fourth sub-channel at the sixth HE-SUB-STF of the first slot 1419, at operation 1407 and may transmit data during the first slot 1419 and the second slot 1420. At operation 1409, the STA 5 may acquire the first sub-channel in the first HE-SUB-STF of the second slot 1420. The STA 6 may try to acquire the first sub-channel at the second HE-SUB-STF of the second slot 1420 during operation 1410, and during operation 1411, the STA 6 may try to acquire the second sub-channel at the third HE-SUB-STF of the second slot 1420, and respectively may determine that both the first and second sub-channels are busy. At operation 1412, the STA 6 may acquire the third sub-channel at the fourth HE-SUB-STF of the second slot 1420.

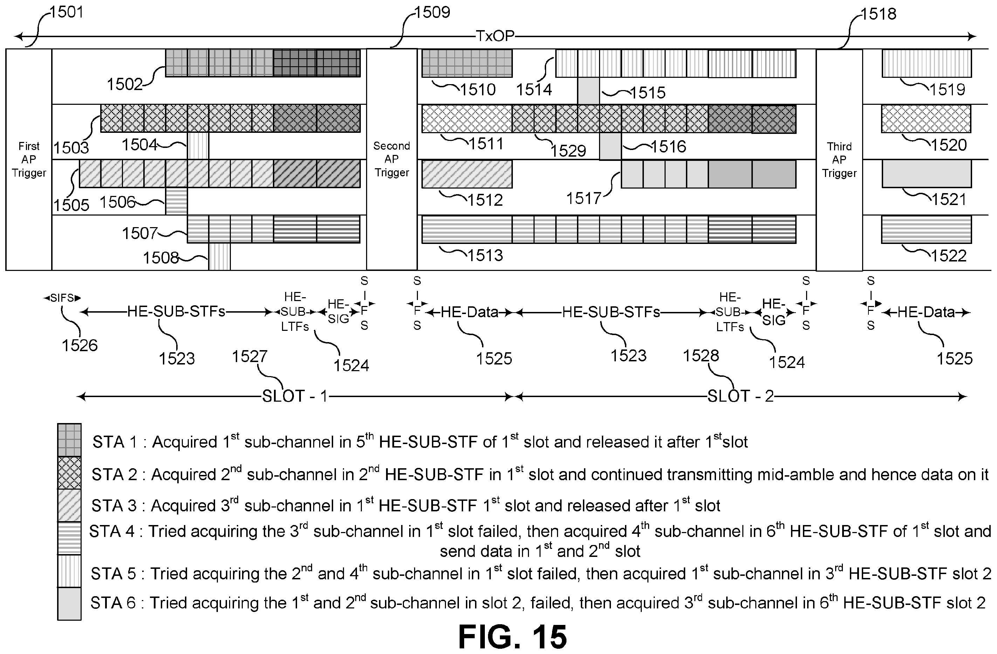

FIG. 15 is a diagram illustrating representative slotted sub-channelized CSMA operations with a double trigger.

For a slotted sub-channelized CSMA operation, after a mid-amble (e.g., every mid-amble) the AP 602 may send a trigger frame, such as a second trigger frame 1509, which may also be referred to as a second AP trigger frame 1509, or a third trigger frame 1518, which may also be referred to as a third AP trigger frame 1518, to renew the TXOP. For example, a first trigger frame 1501, which may also be referred to as a first AP trigger frame 1501, may be considered as a trigger to start a CSMA back off process or procedure in a sub-channel (e.g., each sub-channel). The first trigger frame 1501 may have an initial schedule including information indicating the STAs 1-6 that are to transmit and over which sub-channel these STAs 1-6 are to transmit. The STAs 1-6 may perform the back off process or procedure after the first trigger frame 1501. After the STA 1-6 (e.g., one or more particular STA or each STA) has finished competing for the sub-channels and has acquired one or more sub-channels, the STA 1-6 may send a respective SIG field with its information. This information may include its own PAID.

Using the PAID information of a STA 1-6 (e.g., each STA) that has acquired a sub-channel, the AP 602 may know or determine which STA 1-6 has acquired the medium. If there is or were any collisions in any sub-channel because of hidden nodes, the AP 602 may not be able to decode the SIG field in that sub-channel and based on the AP 602 not decoding the SIG field, the AP 602 may know or determine that a hidden node exists and information regarding the collision itself. If no one contended for any specific sub-channel, the AP 602 may not allocate the specific sub-channel to any STA 1-6. In certain embodiments, the AP 602 may allocate the sub-channel to a safe STA, for example, a STA that the AP 602 may know and/or may determine does not suffer from any hidden nodes. The AP 602 may announce the ID of one or more STAs 1-6 that have acquired a TXOP and respective sub-channels allocated for them in a second trigger frame. The STAs 1-6, which have acquired the TXOP, may start transmitting until the end of a first slot.

If a STA (e.g., STA 1) wants to continue transmission after the mid-amble, the STA (e.g., STA 1) may have priority for the sub-channel until the original TXOP for the AP 602 is completed. The STA 1 may continue sending the mid-amble after its *d*_segment number of one or more OFDMA symbol is transmitted. The STAs 1-6 which are unable to transmit in this segment of a frame, e.g., after the mid-amble, may monitor the sub-channel availability at the mid-amble (e.g., each mid-amble). As multiple STAs 1-6 may be waiting for a sub-channel to be available, the STAs 1-6 may each compete for an open sub-channel. After successfully competing for the open sub-channel and being able to send a complete mid-amble, the STA 1 may send sub-channelized SIG information, including its PAID.

Using the SIG information, the AP 602 may know or may determine which STAs 1-6 have acquired the medium. If there were any collisions in any sub-channel because of hidden nodes, the AP 602 may not be able to decode the SIG field in that sub-channel and the AP 602 may know about the collision (e.g., possibly due to a hidden node). The AP 602 may not allocate that sub-channel, e.g., a sub-channel in which the SIG field was not decoded, to any STA 1-6. If no STA 1-6 contended for a specific sub-channel or specific sub-channels, the AP 602 may not allocate the specific sub-channel or sub-channels. The AP 602 may announce the ID of one or more STAs 602 that has acquired TXOP and one or more respective sub-channels allocated for them in the second trigger frame. The second trigger may be considered a group clear to send (G-CTS) frame and may be a DL-OFDMA frame. The second trigger frame may have (e.g., may only have) a PLCP header including a sub-channelized SIG filed or a regular SIG field. All STAs 602 may be able to read a SIG field of the second trigger and may know if they acquired the TXOP. The STAs 1-6 which have acquired the TXOP may continue transmitting until *d*_segment number of OFDMA symbols have been transmitted.

After transmitting *d*_segment number of OFDMA symbols, if a STA 1-6 determines to wants to continue transmission, it may continue by sending a mid-amble and may reacquire the sub-channel. If any STA 1-6 does not have more data to send in the uplink after transmitting the *d*_segment number of OFDMA symbols, the STA may refrain from sending the mid-amble. Refraining from sending the mid-amble may imply releasing the sub-channel. This process of the STAs 1-6 continuing to reacquire the sub-channel and the AP 602 sending a trigger frame after each mid-amble may continue until the original TXOP obtained by the AP 602 is completed (e.g., is over). The AP 602 may piggyback the ACK or BA along with the trigger frame after the mid-ambles for the STAs 1-6 (e.g., all of the STAs) which finished transmission.

In certain embodiments, the second trigger may include one or more fields used by vendors (e.g., for vendor related information), and/or one or more reserved fields, among other fields.

Referring to FIG. 15, for example, the AP 602 may transmit the AP trigger frame 1501. After a SIFS duration 1526, following the AP trigger frame 1501, the STAs 1 through 6 may contend for and/or acquire a sub-channel. The STA 1 may acquire a medium, e.g., a first sub-channel, at the fifth HE-SUB-STF of a first slot 1527, during operation 1502, and may release the first sub-channel after the first slot 1527 ends. STA 2 may acquire the second sub-channel at the second HE-SUB-STF during the first slot 1527, may transmit a mid-amble 1529, for example, by transmitting HE-SUB-STFs 1523 during a second slot 1528, and may continue transmitting HE-SUB-LTFs and HE-SIG 1524, as well as HE-Data 1525, during the second slot 1528, during operation 1503. At operation 1504, the STA 5 may sense the second sub-channel at the sixth HE-SUB-STF of the first slot 1527, and may determine that it is busy. At operation 1508, the STA 5 may sense the fourth sub-channel at the seventh HE-SUB-STF of the first slot 1527, and may determine that it is busy.

The STA 3 may acquire the third sub-channel at a first HE-SUB-STF of the first slot 1527, during operation 1505, and may release the third sub-channel after the first slot 1527 ends. At operation 1506, The STA 4 may try to acquire the third sub-channel at a fifth HE-SUB_STF of the first slot 1527, and may determine that the third sub-channel is busy. The STA 4 may acquire the fourth sub-channel at the sixth HE-SUB-STF of the first slot 1527, at operation 1507 and may transmit data during the first slot 1527 and the second slot 1528. At operation 1510, the STA 1 may transmit HE-Data 1525 after receiving the second AP trigger frame 1509. Similarly, at operations 1511, 1512, and 1513, the STA 2, the STA 3, and the STA 4, respectively, may transmit HE-Data 1525 after receiving the second AP trigger frame 1509. The STA 5, at operation 1514, may acquire the first sub-channel in the first HE-SUB-STF of the second slot 1528. The STA 6 may try to acquire the first sub-channel at the second HE-SUB-STF of the second slot 1528 during operation 1515, and during operation 1516, the STA 6 may try to acquire the second sub-channel at the third HE-SUB-STF of the second slot 1528, and, respectively, may determine that both the first and second sub-channels are busy. At operation 1517, the STA 6 may acquire the third sub-channel at the fourth HE-SUB-STF of the second slot 1528. At operation 1519, the STA 5 may transmit HE-Data 1525 after receiving the third AP trigger frame 1518. Similarly, at operations 1520, 1521, and 1522, the STA 2, the STA 6, and the STA 4, respectively, may transmit HE-Data 1525 after receiving the third AP trigger frame 1518.

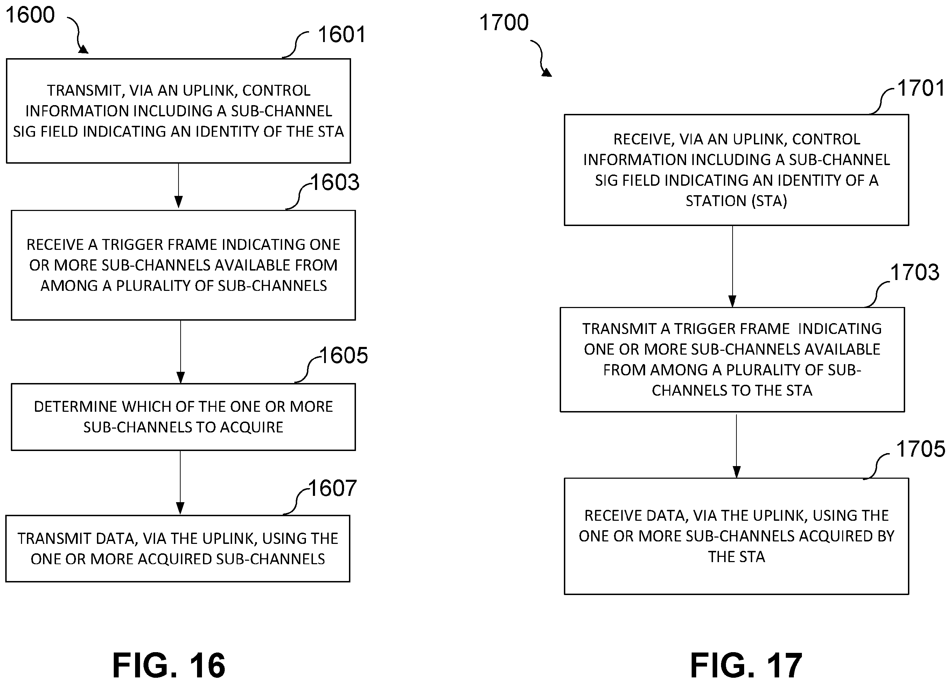

FIG. 16 is a flowchart illustrating a representative method of a STA performing sub-channelized CSMA operations.

Referring to FIG. 16, a STA 601 may perform sub-channelized CSMA operations 1600 as described below according to an embodiment. The STA 601, at operation 1601, may transmit, via an uplink, control information including a sub-channel SIG field indicating an identity of the STA 601. The control information may include the SIG field indicating that the STA 601 is capable of receiving sub-channel allocations and/or capable of operating according to sub-channel allocations. The control information may include a preamble 1001. At operation 1603, the STA 601 may receive a trigger frame 1201 indicating one or more sub-channels available from among a plurality of sub-channels, wherein the one or more sub-channels may be indicated based on sets of sub-channels. At operation 1605, the STA 601 may determine which of the one or more sub-channels to acquire. The STA 601, at operation 1505, may transmit data, via the uplink, using the one or more acquired sub-channels.

FIG. 17 is a flowchart illustrating a representative method of an AP 602 performing sub-channelized CSMA operations with a double trigger.

Referring to FIG. 17, the AP 602 may perform sub-channelized CSMA operations 1700 as described below according to an embodiment. An AP 602, at operation 1701, may receive, via an uplink, control information including a sub-channel SIG field indicating an identity of a Station (STA) 601. The control information may include the SIG field indicating that the STA 601 is capable of receiving sub-channel allocations and/or capable of operating according to sub-channel allocations and may include a preamble 1001. At operation 1703, the AP 602 may transmit a trigger frame, indicating one or more sub-channels available from among a plurality of sub-channels, to the STA 601, wherein the one or more sub-channels may be indicated based on sets of sub-channels. At operation 1705, the AP 602 may receive data, via the uplink, using the one or more acquired sub-channels.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU 102, UE, terminal, base station, RNC, or any host computer.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the exemplary embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost vs. efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

It is also to be understood that the terminology used herein is for the purpose of describing particular embodiments only, and is not intended to be limiting. As used herein, when referred to herein, the terms "station" and its abbreviation "STA", "user equipment" and its abbreviation "UE" may mean (i) a wireless transmit and/or receive unit (WTRU), such as described infra; (ii) any of a number of embodiments of a WTRU, such as described infra; (iii) a wireless-capable and/or wired-capable (e.g., tetherable) device configured with, inter alia, some or all structures and functionality of a WTRU, such as described infra; (iii) a wireless-capable and/or wired-capable device configured with less than all structures and functionality of a WTRU, such as described infra; or (iv) the like. Details of an example WTRU, which may be representative of any UE recited herein, are provided below with respect to FIGS. 1-5.

In certain representative embodiments, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" or "group" is intended to include any number of items, including zero. Additionally, as used herein, the term "number" is intended to include any number, including zero.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

A processor in association with software may be used to implement a radio frequency transceiver for use in a wireless transmit receive unit (WTRU), user equipment (UE), terminal, base station, Mobility Management Entity (MME) or Evolved Packet Core (EPC), or any host computer. The WTRU may be used m conjunction with modules, implemented in hardware and/or software including a Software Defined Radio (SDR), and other components such as a camera, a video camera module, a videophone, a speakerphone, a vibration device, a speaker, a microphone, a television transceiver, a hands free headset, a keyboard, a Bluetooth^{®} module, a frequency modulated (FM) radio unit, a Near Field Communication (NFC) Module, a liquid crystal display (LCD) display unit, an organic light-emitting diode (OLED) display unit, a digital music player, a media player, a video game player module, an Internet browser, and/or any Wireless Local Area Network (WLAN) or Ultra Wide Band (UWB) module.

Although the invention has been described in terms of communication systems, it is contemplated that the systems may be implemented in software on microprocessors/general purpose computers (not shown). In certain embodiments, one or more of the functions of the various components may be implemented in software that controls a general-purpose computer.

In addition, although the invention is illustrated and described herein with reference to specific embodiments, the invention is not intended to be limited to the details shown. Rather, various modifications may be made in the details within the scope and range of equivalents of the claims and without departing from the invention.

### REPRERESENTATIVE EMBODIMENT

In a first representative embodiment, a representative apparatus for using at least one sub-channel of a physical channel for uplink communication, the physical channel including a set of resources within first and second channel boundaries such that the physical channel includes a plurality of sub-channels, each sub-channel including a subset of the resources of the physical channel and having at least one sub-channel boundary which is not coincident with the first or the second channel boundaries, is provided. The representative apparatus includes a Station (STA) including: a processor, and a transmit/receive unit configured to: transmit, via an uplink, control information including a sub-channel SIG field indicating an identity of the STA, receive a trigger frame indicating one or more sub-channels available form among a plurality of sub-channels, determine which of the one or more sub-channels to acquire, and transmit data, via the uplink, using the one or more acquired sub-channels.

In a second representative embodiment, another representative apparatus includes an Access Point (AP) configured to allocate sub-channels of a physical channel for uplink communication by a Station (STA), the physical channel including a set of resources within first and second channel boundaries such that the physical channel includes a plurality of sub-channels, each sub-channel including a subset of the resources of the physical channel and having at least one sub-channel boundary which is not coincident with the first or the second channel boundaries, the AP including: a transmit/receive unit configured to: receive, via an uplink, control information including a sub-channel SIG field indicating an identity of the Station (STA), transmit a trigger frame indicating one or more sub-channels available from among a plurality of sub-channels to the STA; and receive data, via the uplink, using the one or more acquired sub-channels.

In a third representative embodiment, a representative method includes a method implemented by a Station (STA) using at least one sub-channel of a physical channel for uplink communication, the method including: transmitting, via an uplink, control information including a sub-channel SIG field indicating an identity of the STA, receiving a trigger frame indicating one or more sub-channels available form among a plurality of sub-channels, determining which of the one or more sub-channels to acquire, and transmitting data, via the uplink, using the one or more acquired sub-channels.

In a fourth representative embodiment, another representative method includes a method implemented by an Access Point (AP) to allocate sub-channels of a physical channel for uplink communication by a Station (STA), the method including: receiving, via an uplink, control information including a sub-channel SIG field indicating an identity of the Station (STA), transmitting a trigger frame indicating one or more sub-channels available from among a plurality of sub-channels to the STA, receiving data, via the uplink, using the one or more acquired sub-channels.

In a fifth representative embodiment, another representative apparatus includes a Station (STA) configured to use at least one sub-channel of a physical channel for uplink communication, the STA including: a processor configured to: obtain information about at least one neighboring STA, and a transmit/receive unit configured to: transmit the information about the at least one neighboring STA, and receive (1) a group identity of a group including the STA, and (2) information indicating one or more of the plurality of sub-channels that are allocated to the STA.

In a sixth representative embodiment, another representative apparatus includes an Access Point (AP) configured to allocate sub-channels of a physical channel to a first station (STA) of a plurality of STAs and one or more further STAs of the plurality of STAs, the AP including: a transmit/receive unit configured to: for each respective STA of one or more of the plurality of STAs: receive a report including information about one or more neighboring STAs of the respective STA, and a processor configured to: assign a group identity to and allocate the sub-channels of the physical channel to the first STA and the one or more further STAs, as group members of a multi-user group, based on the received reports, wherein the transmit/receive unit is configured to transmit (1) the group identity, and (2) allocation information associated with the one or more sub-channels to at least the first STA and the one or more further STAs, as the group members of the multi-user group.

In a seventh representative embodiment, another representative method includes a method, implemented by a Station (STA) for grouping the STA into a multi-user group using at least one sub-channel of a physical channel, the physical channel including a set of resources such that the physical channel includes a plurality of sub-channels, each sub-channel including a subset of the resources of the physical channel, the method including: obtaining, by the STA, information about at least one neighboring STA, transmitting, by the STA to the AP, the information about the at least one neighboring STA, and receiving, by the STA: (1) a group identity of a group including the STA, and (2) information indicating one or more of the plurality of sub-channels that are allocated to the STA.

In an eighth representative embodiment, another representative method includes a method implemented by an Access Point (AP) to allocate sub-channels of a physical channel to a first station (STA) of a plurality of STAs and one or more further STAs of the plurality of STAs, the method including: for each respective STA of one or more of the plurality of STAs: receiving a report including information about one or more neighboring STAs of the respective STA, assigning a group identity to and allocating the sub-channels of the physical channel to the first STA and the one or more further STAs, as group members of a multi-user group, based on the received reports, and transmitting (1) the group identity, and (2) allocation information associated with the one or more sub-channels to at least the first STA and the one or more further STAs, as the group members of the multi-user group.

In the first representative embodiment, the processor is further configured to execute any of: initiate uplink transmission of data, or end uplink transmission of data, at a sub-channel boundary which is not coincident with the first channel boundary or the second channel boundary.

In the first, second, third, and fourth representative embodiments, the at least one sub-channel boundary is indicated by any of: a time value or a frequency value.

In the first, second, third, and fourth representative embodiments, a respective sub-channel includes time/frequency resources such that a first set of sub-channel boundaries bound a subset of the time/frequency resources in time and a second set of sub-channel boundaries bound the subset of the time/frequency resources in frequency.

In the first representative embodiment, the transmit/receive unit is further configured to transmit the control information on condition that another trigger frame indicating a start of a contention period is received.

In the first representative embodiment, the transmit/receive unit is further configured to transmit the control information indicating that the STA is capable of sub-channel allocations.

In the first representative embodiment, the transmit/receive unit is further configured to obtain, from the received trigger frame, a legacy preamble reserving a transmit opportunity (TXOP) for an entire uplink frame.

In the first representative embodiment, the transmit/receive unit is further configured to obtain, from the received trigger frame, a duration of a transmit opportunity (TXOP) of an Access Point (AP) assigned or announced by the AP, and the duration of the TXOP is a duration for transmitting, by the STA, a length of data.

In the first representative embodiment, the transmit/receive unit is configured to: transmit a preamble prior to data communication, transmit a predefined or signaled number of data-OFDMA symbols, and transmit a mid-amble on condition that the predefined or signaled number of data-OFDMA symbols have been transmitted.

In the first representative embodiment, the processor is configured to determine availability of one or more sub-channels after the preamble, and the transmit/receive unit is further configured to: acquire at least one sub-channel of the one or more sub-channels determined to be available by the processor, receive a subsequent trigger frame after the mid-amble, and transmit data using the acquired sub-channel on condition that a transmit opportunity (TXOP) duration of an Access Point (AP) has not been reached.

In the first representative embodiment, the processor is further configured to perform a channel estimation.

In the first representative embodiment, the transmit/receive unit is further configured to determine the one or more sub-channels to acquire after the preamble is transmitted, and acquire another one or more sub-channels during or after the mid-amble is transmitted.

In the second representative embodiment, further including a processor configured to perform any of: determine a beginning or an ending to the uplink data transmission based on the at least one sub-channel boundary which is not coincident with the first channel boundary or the second channel boundary.

In the second representative embodiment, the transmit/receive unit is further configured to receive further control information on condition that a further trigger frame indicating a start of a subsequent contention period is transmitted.

In the second representative embodiment, the processor is further configured to determine, from the control information, whether the STA is capable of sub-channel allocations; and generate the trigger frame: (1) including the first sub-channel allocation of one or more sub-channels to the STA on condition that the STA is capable of sub-channel allocations or (2) not including the first sub-channel allocation of one or more sub-channels to the STA on condition that the STA is not capable of sub-channel allocations.

In the second representative embodiment, the transmit/receive unit is further configured to transmit the generated trigger frame to the STA.

In the second representative embodiment, the transmit/receive unit is further configured to transmit the trigger frame that includes allocation information to allocate a transmit opportunity (TXOP) to a STA for an entire uplink frame on condition that the STA is not capable of sub-channel allocations.

In the second representative embodiment, the processor is further configured to: determine a duration of a transmit opportunity (TXOP) for the STA; and generate the trigger frame including information indicating the determined duration; and the transmit/receive unit is further configured to transmit the trigger frame.

In the second representative embodiment, the transmit/receive unit is further configured to: transmit the first sub-channel allocation after receiving a preamble; and transmit a second sub-channel allocation during or after receiving a mid-amble.

In the third representative embodiment, the method may further include any of: initiating an uplink transmission of the data, or ending uplink transmission of data, at a sub-channel boundary which is not coincident with the first sub-channel boundary or the second channel boundary.

In the third representative embodiment, the transmitting of the control information includes transmitting the control information on condition that another trigger frame indicating a start of a contention period is received.

In the third representative embodiment, the transmitting of the control information includes transmitting the control information indicating that the STA is capable of sub-channel allocations.

In the third representative embodiment, the method may further include obtaining, from the received trigger frame, a legacy preamble reserving a transmit opportunity (TXOP) for an entire uplink frame.

In the third representative embodiment, the method may further include obtaining, from the received trigger frame, a duration of a transmit opportunity (TXOP) of an Access Point (AP) assigned or announced by the AP, wherein the duration of the TXOP is a duration for transmitting, by the STA, a length of data.

In the third representative embodiment, the method may further include transmitting a preamble prior to data communication, transmitting a predefined or signaled number of data-OFDMA symbols, and transmitting a mid-amble on condition that the predefined or signaled number of data-OFDMA symbols have been transmitted.

In the third representative embodiment, the method may further include determining availability of one or more sub-channels after the preamble, acquiring at least one sub-channel of the one or more sub-channels determined to be available by the processor, receiving a subsequent trigger frame after the mid-amble, and transmitting data using the acquired sub-channel on condition that a TXOP duration of the AP has not been reached.

In the third representative embodiment, the method may further include performing a channel estimation.

In the third representative embodiment, the method may further include determining the one or more sub-channels to acquire after the preamble is transmitted, and acquiring another one or more sub-channels after the mid-amble is transmitted.

In the fourth representative embodiment, the method may further include any of determining a beginning or an ending to the uplink data transmission based on the at least one sub-channel boundary which is not coincident with the first channel boundary or the second channel boundary.

In the fourth representative embodiment, the method may further include receiving further control information on condition that a further trigger frame indicating a start of a subsequent contention period is transmitted.

In the fourth representative embodiment, the method may further include determining, from the control information, whether the STA is capable of sub-channel allocations; and generating the trigger frame: (1) including the first sub-channel allocation of one or more sub-channels to the STA on condition that the STA is capable of sub-channel allocations or (2) not including the first sub-channel allocation of one or more sub-channels to the STA on condition that the STA is not capable of sub-channel allocations.

In the fourth representative embodiment, the method may further include transmitting the generated trigger frame to the STA.

In the fourth representative embodiment, wherein the transmitting of the trigger frame comprises transmitting the trigger frame that includes allocation information to allocate a transmit opportunity (TXOP) to a STA for an entire uplink frame on condition that the STA is not capable of sub-channel allocations.

In the fourth representative embodiment, the method may further include determining a duration of a transmit opportunity (TXOP) for the STA, generating the trigger frame including information indicating the determined duration, and transmitting the trigger frame.

In the fourth representative embodiment, the method may further include transmitting the first sub-channel allocation after receiving a preamble, and transmitting a second sub-channel allocation during or after receiving a mid-amble.

In the fifth representative embodiment, the set of resources included in the physical channel are time/frequency resources.

In the fifth representative embodiment, the processor is further configured to transmit data according to the group identity and the one or more of the plurality of sub-channels allocated to the STA.

In the fifth representative embodiment, the transmit/receive unit is configured to receive a discovery frame transmitted by the at least one neighboring STA, and the processor is configured to determine the information about the at least one neighboring STA based on information associated with the discovery frame.

In the fifth representative embodiment, the information associated with the discovery frame includes any of: (1) information included in the discovery frame; and/or (2) measurements associated with the discovery frame.

In the fifth representative embodiment, the discovery frame includes information indicating any of: (1) that the STA is a legacy STA and/or (2) that the STA performs orthogonal frequency division multiple access (OFDMA) operations.

In the fifth representative embodiment, the transmit/receive unit is configured to receive a discovery frame including neighboring STA related information, as any of: (1) location information associated with the at least one neighboring STA, (2) power level information associated with the at least one neighboring STA, (3) direction information associated with the at least one neighboring STA, or (4) velocity information associated with the at least one neighboring STA, and the processor is configured to determine the group identity based on the neighboring STA related information.

In the fifth representative embodiment, the transmit/receive unit is configured to receive a filter indicating criteria for processing the information about the at least one neighboring STA, and the processor is configured to store and/or transmit the information about the at least one neighboring STA on condition that the criteria indicated by the filter is satisfied based on information associated with a received discovery frame.

In the fifth representative embodiment, the information about the at least one neighboring STA is transmitted as a Neighbor Reporting element.

In the fifth representative embodiment, the Neighbor Reporting element includes one or more of information on neighbors included in a Basic Subscriber Set (BSS) of the STA and information on neighbors included in one or more neighboring BSSs, and the information on the neighbors included in the BSS and the information on the neighbors included in the neighboring BSSs respectively include neighboring STA related information for at least one of the neighbors.

In the sixth representative embodiment, the processor is configured to assign STAs located close to one another into the multi-user group based on neighboring STA related information, as any of: (1) location information associated with the at least one neighboring STA, (2) power level information associated with the at least one neighboring STA, (3) direction information associated with the at least one neighboring STA, or (4) velocity information associated with the at least one neighboring STA included in the received reports.

In the sixth representative embodiment, the processor is configured to assign STAs that interfere with one another from one or more Overlapping BSS (OBSS) into the multi-user group based on information included in the received reports.

In the sixth representative embodiment, the transmit/receive unit is configured to transmit a discovery frame including information associated with any of: (1) the AP, or (2) one or more neighboring STAs.

In the sixth representative embodiment, each received report includes a Neighbor Report element having information indicating any of: (1) that the respective STA is a legacy STA, or (2) that the respective STA performs orthogonal frequency division multiple access (OFDMA) operations.

In the seventh representative embodiment, the set of resources included in the physical channel are time/frequency resources.

In the seventh representative embodiment, the method further includes transmitting data according to the group identity and the one or more of the plurality of sub-channels allocated to the STA.

In the seventh representative embodiment, the method further includes receiving a discovery frame transmitted by the at least one neighboring STA, and determining the information about the at least one neighboring STA based on information associated with the discovery frame.

In the seventh representative embodiment, the information associated with the discovery frame includes any of: (1) information included in the discovery frame, or (2) measurements associated with the discovery frame.

In the seventh representative embodiment, the discovery frame includes information indicating any of: (1) that the STA is a legacy STA, or (2) that the STA performs orthogonal frequency division multiple access (OFDMA) operations.

In the seventh representative embodiment, the method further includes receiving a discovery frame including neighboring STA related information, as any of: (1) location information associated with the at least one neighboring STA, (2) power level information associated with the at least one neighboring STA, (3) direction information associated with the at least one neighboring STA, or (4) velocity information associated with the at least one neighboring STA, and determining the group identity based on the neighboring STA related information.

In the seventh representative embodiment, the method further includes receiving a filter indicating criteria for processing the information about the at least one neighboring STA, and storing or transmitting the information about the at least one neighboring STA on condition that the criteria indicated by the filter is satisfied based on information associated with a received discovery frame.

In the eighth representative embodiment, the method further includes assigning STAs located close to one another into the multi-user group based on neighboring STA related information, as any of: (1) location information associated with the at least one neighboring STA, (2) power level information associated with the at least one neighboring STA, (3) direction information associated with the at least one neighboring STA, or (4) velocity information associated with the at least one neighboring STA included in the received reports.

In the eighth representative embodiment, the method further includes assigning STAs that interfere with one another from one or more Overlapping BSS (OBSS) into the multi-user group based on information included in the received reports.

In the eighth representative embodiment, the method further includes transmitting a discovery frame including information associated with any of: the AP and/or one or more neighboring STAs.

In the eighth representative embodiment, each received report includes a Neighbor Report element having information indicating any of: (1) that the respective STA is a legacy STA, or (2) that the respective STA performs orthogonal frequency division multiple access (OFDMA) operations.

### Embodiments:

1. A Station (STA) configured to use at least one sub-channel of a physical channel for uplink communication, the physical channel including a set of resources within first and second channel boundaries such that the physical channel includes a plurality of sub-channels, each sub-channel comprising a subset of the resources of the physical channel and having at least one sub-channel boundary which is not coincident with the first or the second channel boundaries, the STA comprising:
   a processor; and
   a transmit/receive unit configured to:
      transmit, via an uplink, control information including a sub-channel SIG field indicating an identity of the STA;
      receive a trigger frame indicating one or more sub-channels available from among a plurality of sub-channels;
      determine which of the one or more sub-channels to acquire; and
      transmit data, via the uplink, using the one or more acquired sub-channels.
2. The STA of embodiment 1, wherein the processor is further configured to execute any of: initiate uplink transmission of data, or end uplink transmission of data, at a sub-channel boundary which is not coincident with the first channel boundary or the second channel boundary.
3. The STA of embodiment 1, wherein the at least one sub-channel boundary is indicated by any of: a time value or a frequency value.
4. The STA of embodiment 1, wherein a respective sub-channel includes time/frequency resources such that a first set of sub-channel boundaries bound a subset of the time/frequency resources in time and a second set of sub-channel boundaries bound the subset of the time/frequency resources in frequency.
5. The STA of embodiment 1, wherein the transmit/receive unit is further configured to transmit the control information on condition that another trigger frame indicating a start of a contention period is received.
6. The STA of embodiment 1, wherein the transmit/receive unit is further configured to transmit the control information indicating that the STA is capable of sub-channel allocations.
7. The STA of embodiment 1, wherein the transmit/receive unit is further configured to obtain, from the received trigger frame, a legacy preamble reserving a transmit opportunity (TXOP) for an entire uplink frame.
8. The STA of embodiment 1, wherein:
   the transmit/receive unit is further configured to obtain, from the received trigger frame, a duration of a transmit opportunity (TXOP) of an Access Point (AP) assigned or announced by the AP; and
   the duration of the TXOP is a duration for transmitting, by the STA, a length of data.
9. The STA of embodiment 1, wherein the transmit/receive unit is configured to:
   transmit a preamble prior to data communication;
   transmit a predefined or signaled number of data-OFDMA symbols; and
   transmit a mid-amble on condition that the predefined or signaled number of data-OFDMA symbols have been transmitted.
10. The STA of embodiment 9, wherein:
   the processor is configured to:
      determine availability of one or more sub-channels after the preamble; and
   the transmit/receive unit is further configured to:
      acquire at least one sub-channel of the one or more sub-channels determined to be available by the processor;
      receive a subsequent trigger frame after the mid-amble; and
      transmit data using the acquired sub-channel on condition that a transmit opportunity (TXOP) duration of an Access Point (AP) has not been reached.
11. The STA of embodiment 9, wherein the processor is further configured to perform a channel estimation.
12. The STA of embodiment 9, wherein the transmit/receive unit is further configured to:
   determine the one or more sub-channels to acquire after the preamble is transmitted; and
   acquire another one or more sub-channels during or after the mid-amble is transmitted.
13. An Access Point (AP) configured to allocate sub-channels of a physical channel for uplink communication by a Station (STA), the physical channel including a set of resources within first and second channel boundaries such that the physical channel includes a plurality of sub-channels, each sub-channel comprising a subset of the resources of the physical channel and having at least one sub-channel boundary which is not coincident with the first or the second channel boundaries, the AP comprising:
   a transmit/receive unit configured to:
   receive, via an uplink, control information including a sub-channel SIG field indicating an identity of the Station (STA);
   transmit a trigger frame indicating one or more sub-channels available from among a plurality of sub-channels to the STA; and
   receive data, via the uplink, using the one or more acquired sub-channels.
14. The AP of embodiment 13, further comprising a processor configured to perform any of: determine a beginning or an ending to the uplink data transmission based on the at least one sub-channel boundary which is not coincident with the first channel boundary or the second channel boundary.
15. The AP of embodiment 13, wherein the at least one sub-channel boundary is indicated by any of: a time value or a frequency value.
16. The AP of embodiment 13, wherein a respective sub-channel includes time/frequency resources such that a first set of sub-channel boundaries bound a subset of the time/frequency resources in time and a second set of sub-channel boundaries bound the subset of the time/frequency resources in frequency.
17. The AP of embodiment 13, wherein the transmit/receive unit is further configured to receive further control information on condition that a further trigger frame indicating a start of a subsequent contention period is transmitted.
18. The AP of embodiment 13, wherein the processor is further configured to:
   determine, from the control information, whether the STA is capable of sub-channel allocations; and
   generate the trigger frame: (1) including the first sub-channel allocation of one or more sub-channels to the STA on condition that the STA is capable of sub-channel allocations or (2) not including the first sub-channel allocation of one or more sub-channels to the STA on condition that the STA is not capable of sub-channel allocations.
19. The AP of embodiment 18, wherein the transmit/receive unit is further configured to transmit the generated trigger frame to the STA.
20. The AP of embodiment 13, wherein the transmit/receive unit is further configured to transmit the trigger frame that includes allocation information to allocate a transmit opportunity (TXOP) to a STA for an entire uplink frame on condition that the STA is not capable of sub-channel allocations.
21. The AP of embodiment 13, wherein:
   the processor is further configured to:
      determine a duration of a transmit opportunity (TXOP) for the STA; and
      generate the trigger frame including information indicating the determined duration; and
   the transmit/receive unit is further configured to transmit the trigger frame.
22. The AP of embodiment 13, wherein the transmit/receive unit is further configured to:
   transmit the first sub-channel allocation after receiving a preamble; and
   transmit a second sub-channel allocation during or after receiving a mid-amble.
23. A method implemented by a Station (STA) using at least one sub-channel of a physical channel for uplink communication, the physical channel including a set of resources within first and second channel boundaries such that the physical channel includes a plurality of sub-channels, each sub-channel comprising a subset of the resources of the physical channel and having at least one sub-channel boundary which is not coincident with the first or the second channel boundaries, the method comprising:
   transmitting, via an uplink, control information including a sub-channel SIG field indicating an identity of the STA;
   receiving a trigger frame indicating one or more sub-channels available form among a plurality of sub-channels;
   determining which of the one or more sub-channels to acquire; and
   transmitting data, via the uplink, using the one or more acquired sub-channels.
24. The method of embodiment 23, further comprising any of:
   initiating an uplink transmission of the data, or ending uplink transmission of data, at a sub-channel boundary which is not coincident with the first sub-channel boundary or the second channel boundary.
25. The method of embodiment 23, wherein the at least one sub-channel boundary is indicated by any of a time value or a frequency value.
26. The method of embodiment 23, wherein a respective a respective sub-channel includes time/frequency resources such that a first set of sub-channel boundaries bound a subset of the time/frequency resources in time and a second set of sub-channel boundaries bound the subset of the time/frequency resources in frequency.
27. The method of embodiment 23, wherein the transmitting of the control information includes transmitting the control information on condition that another trigger frame indicating a start of a contention period is received.
28. The method of embodiment 23, wherein the transmitting of the control information includes transmitting the control information indicating that the STA is capable of sub-channel allocations.
29. The method of embodiment 23, further comprising obtaining, from the received trigger frame, a legacy preamble reserving a transmit opportunity (TXOP) for an entire uplink frame.
30. The method of embodiment 23, further comprising obtaining, from the received trigger frame, a duration of a transmit opportunity (TXOP) of an Access Point (AP) assigned or announced by the AP,
   wherein the duration of the TXOP is a duration for transmitting, by the STA, a length of data.
31. The method of embodiment 23, further comprising:
   transmitting a preamble prior to data communication;
   transmitting a predefined or signaled number of data-OFDMA symbols; and
   transmitting a mid-amble on condition that the predefined or signaled number of data-OFDMA symbols have been transmitted.
32. The method of embodiment 31, further comprising
   determining availability of one or more sub-channels after the preamble;
   acquiring at least one sub-channel of the one or more sub-channels determined to be available by the processor;
   receiving a subsequent trigger frame after the mid-amble; and
   transmitting data using the acquired sub-channel on condition that a TXOP duration of the AP has not been reached.
33. The method of embodiment 31, further comprising performing a channel estimation.
34. The method of embodiment 31, further comprising:
   determining the one or more sub-channels to acquire after the preamble is transmitted; and
   acquiring another one or more sub-channels after the mid-amble is transmitted.
35. A method implemented by an Access Point (AP) to allocate sub-channels of a physical channel for uplink communication by a Station (STA), the physical channel including a set of resources within first and second channel boundaries such that the physical channel includes a plurality of sub-channels, each sub-channel comprising a subset of the resources of the physical channel and having at least one sub-channel boundary which is not coincident with the first or the second channel boundaries, the method comprising:
   receiving, via an uplink, control information including a sub-channel SIG field indicating an identity of the Station (STA);
   transmitting a trigger frame indicating one or more sub-channels available from among a plurality of sub-channels to the STA;
   receiving data, via the uplink, using the one or more acquired sub-channels.
36. The method of embodiment 35, further comprising any of:
   determining a beginning or an ending to the uplink data transmission based on the at least one sub-channel boundary which is not coincident with the first channel boundary or the second channel boundary.
37. The method of embodiment 35, wherein the at least one sub-channel boundary is indicated by any of: a time value or a frequency value.
38. The method of embodiment 35, wherein a respective sub-channel includes time/frequency resources such that a first set of sub-channel boundaries bound a subset of the time/frequency resources in time and a second set of sub-channel boundaries bound the subset of the time/frequency resources in frequency.
39. The method of embodiment 35, further comprising receiving further control information on condition that a further trigger frame indicating a start of a subsequent contention period is transmitted.
40. The method of embodiment 35, further comprising:
   determining, from the control information, whether the STA is capable of sub-channel allocations; and
   generating the trigger frame: (1) including the first sub-channel allocation of one or more sub-channels to the STA on condition that the STA is capable of sub-channel allocations or (2) not including the first sub-channel allocation of one or more sub-channels to the STA on condition that the STA is not capable of sub-channel allocations.
41. The method of embodiment 40, further comprising transmitting the generated trigger frame to the STA.
42. The method of embodiment 35, wherein the transmitting of the trigger frame comprises transmitting the trigger frame that includes allocation information to allocate a transmit opportunity (TXOP) to a STA for an entire uplink frame on condition that the STA is not capable of sub-channel allocations.
43. The method of embodiment 35, further comprising:
   determining a duration of a transmit opportunity (TXOP) for the STA;
   generating the trigger frame including information indicating the determined duration; and
   transmitting the trigger frame.
44. The method of embodiment 35, further comprising:
   transmitting the first sub-channel allocation after receiving a preamble; and
   transmitting a second sub-channel allocation during or after receiving a mid-amble.
45. A Station (STA) configured to use at least one sub-channel of a physical channel for uplink communication, the physical channel including a set of resources such that the physical channel includes a plurality of sub-channels, each sub-channel comprising a subset of the resources of the physical channel, the STA comprising:
   a processor configured to:
      obtain information about at least one neighboring STA; and
   a transmit/receive unit configured to:
      transmit the information about the at least one neighboring STA; and
      receive (1) a group identity of a group including the STA; and (2) information indicating one or more of the plurality of sub-channels that are allocated to the STA.
46. The STA of embodiment 45, wherein the set of resources included in the physical channel are time/frequency resources.
47. The STA of embodiment 45, wherein the processor is further configured to transmit data according to the group identity and the one or more of the plurality of sub-channels allocated to the STA.
48. The STA of embodiment 45, wherein:
   the transmit/receive unit is configured to receive a discovery frame transmitted by the at least one neighboring STA, and
   the processor is configured to determine the information about the at least one neighboring STA based on information associated with the discovery frame.
49. The STA of embodiment 48, wherein the information associated with the discovery frame includes any of: (1) information included in the discovery frame; and/or (2) measurements associated with the discovery frame.
50. The STA of embodiment 49, wherein the discovery frame includes information indicating any of: (1) that the STA is a legacy STA and/or (2) that the STA performs orthogonal frequency division multiple access (OFDMA) operations.
51. The STA of embodiment 45, wherein:
   the transmit/receive unit is configured to receive a discovery frame including neighboring STA related information, as any of: (1) location information associated with the at least one neighboring STA, (2) power level information associated with the at least one neighboring STA, (3) direction information associated with the at least one neighboring STA, or (4) velocity information associated with the at least one neighboring STA; and
   the processor is configured to determine the group identity based on the neighboring STA related information.
52. The STA of embodiment 45, wherein:
   the transmit/receive unit is configured to receive a filter indicating criteria for processing the information about the at least one neighboring STA; and
   the processor is configured to store and/or transmit the information about the at least one neighboring STA on condition that the criteria indicated by the filter is satisfied based on information associated with a received discovery frame.
53. The STA of embodiment 45, wherein the information about the at least one neighboring STA is transmitted as a Neighbor Reporting element.
54. The STA of embodiment 53, wherein:
   the Neighbor Reporting element includes one or more of information on neighbors included in a Basic Subscriber Set (BSS) of the STA and information on neighbors included in one or more neighboring BSSs; and
   the information on the neighbors included in the BSS and the information on the neighbors included in the neighboring BSSs respectively include neighboring STA related information for at least one of the neighbors.
55. An Access Point (AP) configured to allocate sub-channels of a physical channel to a first station (STA) of a plurality of STAs and one or more further STAs of the plurality of STAs, the AP comprising:
   a transmit/receive unit configured to:
      for each respective STA of one or more of the plurality of STAs:
      receive a report including information about one or more neighboring STAs of the respective STA; and
   a processor configured to:
      assign a group identity to and allocate the sub-channels of the physical channel to the first STA and the one or more further STAs, as group members of a multi-user group, based on the received reports,
   wherein the transmit/receive unit is configured to transmit (1) the group identity, and (2) allocation information associated with the one or more sub-channels to at least the first STA and the one or more further STAs, as the group members of the multi-user group.
56. The AP of embodiment 55, wherein the processor is configured to assign STAs located close to one another into the multi-user group based on neighboring STA related information, as any of: (1) location information associated with the at least one neighboring STA, (2) power level information associated with the at least one neighboring STA, (3) direction information associated with the at least one neighboring STA, or (4) velocity information associated with the at least one neighboring STA included in the received reports.
57. The AP of embodiment 55, wherein the processor is configured to assign STAs that interfere with one another from one or more Overlapping BSS (OBSS) into the multi-user group based on information included in the received reports.
58. The AP of embodiment 55, wherein the transmit/receive unit is configured to transmit a discovery frame including information associated with any of: (1) the AP, or (2) one or more neighboring STAs.
59. The AP of embodiment 55, wherein each received report includes a Neighbor Report element having information indicating any of: (1) that the respective STA is a legacy STA, or (2) that the respective STA performs orthogonal frequency division multiple access (OFDMA) operations.
60. A method, implemented by a Station (STA) for grouping the STA into a multi-user group using at least one sub-channel of a physical channel, the physical channel including a set of resources such that the physical channel includes a plurality of sub-channels, each sub-channel comprising a subset of the resources of the physical channel, the method comprising:
   obtaining, by the STA, information about at least one neighboring STA;
   transmitting, by the STA to the AP, the information about the at least one neighboring STA; and
   receiving, by the STA: (1) a group identity of a group including the STA, and (2) information indicating one or more of the plurality of sub-channels that are allocated to the STA.
61. The method of embodiment 60, wherein the set of resources included in the physical channel are time/frequency resources.
62. The method of embodiment 60, further comprising:
   transmitting data according to the group identity and the one or more of the plurality of sub-channels allocated to the STA.
63. The method of embodiment 60, further comprising:
   receiving a discovery frame transmitted by the at least one neighboring STA; and
   determining the information about the at least one neighboring STA based on information associated with the discovery frame.
64. The method of embodiment 63, wherein the information associated with the discovery frame includes any of: (1) information included in the discovery frame, or (2) measurements associated with the discovery frame.
65. The method of embodiment 63, wherein the discovery frame includes information indicating any of: (1) that the STA is a legacy STA, or (2) that the STA performs orthogonal frequency division multiple access (OFDMA) operations.
66. The method of embodiment 60, further comprising:
   receiving a discovery frame including neighboring STA related information, as any of: (1) location information associated with the at least one neighboring STA, (2) power level information associated with the at least one neighboring STA, (3) direction information associated with the at least one neighboring STA, or (4) velocity information associated with the at least one neighboring STA; and
   determining the group identity based on the neighboring STA related information.
67. The method of embodiment 60, further comprising receiving a filter indicating criteria for processing the information about the at least one neighboring STA; and
   storing or transmitting the information about the at least one neighboring STA on condition that the criteria indicated by the filter is satisfied based on information associated with a received discovery frame.
68. A method implemented by an Access Point (AP) to allocate sub-channels of a physical channel to a first station (STA) of a plurality of STAs and one or more further STAs of the plurality of STAs, the method comprising:
   for each respective STA of one or more of the plurality of STAs:
   receiving a report including information about one or more neighboring STAs of the respective STA;
   assigning a group identity to and allocating the sub-channels of the physical channel to the first STA and the one or more further STAs, as group members of a multi-user group, based on the received reports; and
   transmitting (1) the group identity, and (2) allocation information associated with the one or more sub-channels to at least the first STA and the one or more further STAs, as the group members of the multi-user group.
69. The method of embodiment 68, further comprising assigning STAs located close to one another into the multi-user group based on neighboring STA related information, as any of: (1) location information associated with the at least one neighboring STA, (2) power level information associated with the at least one neighboring STA, (3) direction information associated with the at least one neighboring STA, or (4) velocity information associated with the at least one neighboring STA included in the received reports.
70. The method of embodiment 68, further comprising assigning STAs that interfere with one another from one or more Overlapping BSS (OBSS) into the multi-user group based on information included in the received reports.
71. The method of embodiment 68, further comprising transmitting a discovery frame including information associated with any of: the AP and/or one or more neighboring STAs.
72. The method of embodiment 68, wherein each received report includes a Neighbor Report element having information indicating any of: (1) that the respective STA is a legacy STA, or (2) that the respective STA performs orthogonal frequency division multiple access (OFDMA) operations.

## Claims

1. A first station, STA, comprising:
a transceiver; and
a processor configured to:
receive, via the transceiver, a first packet from a second STA and a second packet from a third STA;
determine neighbor information associated with the second STA based on the first packet and associated with the third STA based on the second packet, wherein the neighbor information comprises an indication of an overlapping basic service set, OBSS, between the second STA and the third STA; and
send, via the transceiver, an indication of the OBSS between the second STA and the third STA.

2. A method performed by a first station, STA, the method comprising:
receiving a first packet from a second STA and a second packet from a third STA;
determining neighbor information associated with the second STA based on the first packet and associated with the third STA based on the second packet, wherein the neighbor information comprises an indication of an overlapping basic service set, OBSS, between the second STA and the third STA; and
sending an indication of the OBSS between the second STA and the third STA.

3. The first STA of claim 1, wherein the processor is configured to send, via the transceiver, a discovery frame to the second STA and to the third STA, wherein the discovery frame comprises an identifier of a basic service set, BSS.

4. The first STA of claim 3, wherein the processor is configured to assign the second STA and the third STA to a multi-user, MU, group based on the OBSS between the second STA and the third STA and based on the second STA and the third STA being in a geographical vicinity of the first STA, wherein the MU group comprises an MU orthogonal frequency division multiple access, OFDMA, group and wherein the second STA and the third STA are each in the MU OFDMA group and each in the BSS.

5. The first STA of claim 1, wherein the processor is configured to:
determine a received power associated with the first packet;
determine that the second STA is in a geographical vicinity of the first STA based on a comparison of the received power associated with the first packet to a power threshold;
determine a received power associated with the second packet; and
determine that the third STA is in a geographical vicinity of the first STA based on a comparison of the received power associated with the second packet to the power threshold.

6. The first STA of claim 1, wherein the processor is configured to:
receive, via the transceiver, an indication of a location associated with the second STA; and
determine that the second STA is in a geographical vicinity of the first STA based on the indication of the location associated with the second STA.

7. The first STA of claim 1, wherein the processor is configured to:
determine to assign first resources to the second STA and second resources to the third STA based on the OBSS between the second STA and the third STA.

8. The first STA of claim 1, wherein the neighbor information comprises an indication of a BSS color associated with the second STA and of a BSS color associated with the third STA, and wherein the processor is configured to:
assign the second STA and the third STA to a multi-user, MU, group based on the BSS color associated with the second STA and on the BSS color associated with the third STA.

9. The first STA of claim 8, wherein the BSS color associated with the second STA and the BSS color associated with the third STA are the same BSS color, and wherein the processor is configured to send, via the transceiver, an indication of the same BSS color.

10. The method of claim 2, comprising:
sending a discovery frame to the second STA and to the third STA, wherein the discovery frame comprises an identifier of a basic service set, BSS; and
assigning the second STA and the third STA to a multi-user, MU, group based on the OBSS between the second STA and the third STA and based on the second STA and the third STA being in a geographical vicinity of the first STA, wherein the MU group comprises an MU orthogonal frequency division multiple access, OFDMA, group and wherein the second STA and the third STA are each in the MU OFDMA group and each in the BSS.

11. The method of claim 2, comprising:
determining a received power associated with the first packet;
determining that the second STA is in a geographical vicinity of the first STA based on a comparison of the received power associated with the first packet to a power threshold;
determining a received power associated with the second packet; and
determining that the third STA is in the geographical vicinity of the first STA based on a comparison of the received power associated with the second packet to the power threshold.

12. The method of claim 2, comprising:
receiving an indication of a location associated with the second STA; and
determining that the second STA is in a geographical vicinity of the first STA based on the indication of the location associated with the second STA.

13. The method of claim 11, wherein the neighbor information comprises an indication of a BSS color associated with the second STA and of a BSS color associated with the third STA, and wherein the method comprises:
assigning the second STA and the third STA to a multi-user (MU) group based on the BSS color associated with the second STA and on the BSS color associated with the third STA.

14. The method of claim 13, wherein the BSS color associated with the second STA and the BSS color associated with the third STA are the same BSS color, and wherein the method comprises sending an indication of the same BSS color.

15. The first STA of claim 1 or the method of claim 2, wherein the geographical vicinity of the first STA comprises an operational vicinity based on a received power threshold.
